(19) **Europäisches Patentamt European Patent Office Office européen des brevets**

(11) **EP 4 722 290 A1**

(12) **EUROPEAN PATENT APPLICATION**
published in accordance with Art. 153(4) EPC

(43) Date of publication:
08.04.2026 Bulletin 2026/15

(51) International Patent Classification (IPC):
C08L 27/12 (2006.01)   C08F 2/18 (2006.01)
C08K 5/14 (2006.01)   C08K 7/22 (2006.01)

(21) Application number: 24811020.7

(22) Date of filing: 16.05.2024

(52) Cooperative Patent Classification (CPC):
C08F 2/18; C08K 5/14; C08K 7/22; C08L 27/12

(86) International application number:
PCT/JP2024/018101

(87) International publication number:
WO 2024/242013 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.05.2023  JP 2023086057
28.11.2023  JP 2023200672

(71) Applicant: Zeon Corporation
Tokyo 100-8246 (JP)

(72) Inventor: KATADA, Arinobu
Tokyo 100-8246 (JP)

(74) Representative: Kraus & Lederer PartGmbB
Thomas-Wimmer-Ring 15
80539 München (DE)

(54) **FLUORORUBBER COMPOSITION AND CROSSLINKED MOLDED OBJECT FORMED THEREFROM**

(57) A fluorine rubber composition configured to provide a light-weight crosslinked molded body having a reduced compression set and a crosslinked molded body obtained by crosslinking molding the fluorine rubber composition are provided. A fluorine rubber composition comprising hollow particles and a fluorine rubber, wherein the hollow particles comprise a shell, which contains a resin, and a hollow portion surrounded by the shell, and the hollow particles have an iodine value of 10 g/100 g or more and 100 g/100 g or less, which is measured in accordance with JIS K 0070, and wherein the fluorine rubber is a fluorine rubber that is crosslinkable by a peroxide.

EP 4 722 290 A1

## Description

Technical Field

The present disclosure relates to a fluorine rubber composition comprising hollow particles, and a crosslinked molded body of the fluorine rubber composition.

Background Art

Rubber is used in a wide range of fields for various kinds of applications such as a shock absorber, a packing, a tube, an O-ring, a gasket and a sealing material. For example, weight reduction is required of automotive rubber products to reduce fuel consumption of automobiles.

As a method for reducing the weight of rubber products, it is known to mix a rubber with a foaming agent and foam the mixed rubber by heating in a molding step to obtain a foamed elastomer molded body (for example, see Patent Document 1). However, the method of using the foaming agent has difficulty in controlling the size of pores formed by foaming and has limitations in achievable dimensional stability.

Meanwhile, as a method for imparting characteristics or functions such as weight reduction, heat insulation and opacification by introducing many fine pores into a molded body, it is known to incorporate hollow particles in a molding material (for example, see Patent Documents 2 and 3). In the method of incorporating the hollow particles, the voids of the hollow particles contained in the molding material function as pores. Accordingly, unlike the case of using a foaming agent, there is no problem with controlling the size of pores formed by foaming.

Among rubbers, fluorine rubber is used in applications where heat resistance is especially required (e.g., automobile engine parts) and applications where chemical resistance is required (e.g., in the field of chemistry) since its heat resistance and chemical resistance are better than other kinds of rubbers. Patent Document 4 discloses a fluorine rubber composition provided with, by using a combination of two kinds of specific processing aids, improved properties that are required for molding processability, such as crosslinking rate, releasability, hardness and compression set resistance.

Citation List

Patent Documents

Patent Document 1: Japanese Patent No. 6116787
Patent Document 2: International Publication No. WO2020/261926
Patent Document 3: International Publication No. WO2021/112110
Patent Document 4: International Publication No. WO2019/230830

Summary

Technical Problem

However, a fluorine rubber product having both light weight and compression set resistance has not been known yet.

In light of the above problems, an object of the present disclosure is to provide a fluorine rubber composition configured to provide a light-weight crosslinked molded body having a reduced compression set, and another object of the present disclosure is to provide a crosslinked molded body obtained by crosslinking molding the fluorine rubber composition.

Solution to Problem

The present disclosure provides the following fluorine rubber composition.

[1] A fluorine rubber composition comprising hollow particles and a fluorine rubber,

wherein the hollow particles comprise a shell, which contains a resin, and a hollow portion surrounded by the shell, and the hollow particles have an iodine value of 10 g/100 g or more and 100 g/100 g or less, which is measured in accordance with JIS K 0070, and

wherein the fluorine rubber is a fluorine rubber that is crosslinkable by a peroxide.

[2] The fluorine rubber composition according to the above [1], wherein a content of the hollow particles is 1 part by mass or more and 50 parts by mass or less with respect to 100 parts by mass of the fluorine rubber.

[3] The fluorine rubber composition according to the above [1] or [2], wherein the fluorine rubber is a fluorine rubber containing at least one kind of halogen atom selected from the group consisting of iodine and bromine in a molecular chain thereof.

[4] The fluorine rubber composition according to any one of the above [1] to [3], wherein a percentage of particles having a circularity of 0.85 or less is less than 15% by mass in the hollow particles.

[5] The fluorine rubber composition according to any one of the above [1] to [4], wherein the hollow particles have a residual volatile component content of less than 100 ppm.

[6] The fluorine rubber composition according to any one of the above [1] to [5], wherein the hollow particles contain, as the resin, a polymer containing a crosslinkable monomer unit of 50% by mass or more.

[7] The fluorine rubber composition according to any one of the above [1] to [6], wherein the hollow particles have a volume average particle diameter of 0.1 $\mu$m or more and 100 $\mu$m or less.

[8] The fluorine rubber composition according to any one of the above [1] to [7],

wherein the fluorine rubber composition further comprises a reinforcing agent;
wherein the reinforcing agent is at least one selected from the group consisting of carbon black and silica; and
wherein a content of the reinforcing agent is 1 part by mass or more and 15 parts by mass or less with respect to 100 parts by mass of the fluorine rubber.

[9] The fluorine rubber composition according to the above [8], wherein the carbon black has a nitrogen adsorption specific surface area of 5 m$^2$/g or more and 150 m$^2$/g or less.

[10] The fluorine rubber composition according to the above [8], wherein the reinforcing agent is a coupling agent-treated silica.

The present disclosure also provides the following crosslinked molded body.

A crosslinked molded body obtained by crosslinking molding the fluorine rubber composition defined by any one of the above [1] to [10] with an organic peroxide.

Advantageous Effects of Invention

According to the present disclosure, a fluorine rubber composition configured to provide a light-weight crosslinked molded body having a reduced compression set and the crosslinked molded body are provided.

Brief Description of Drawing

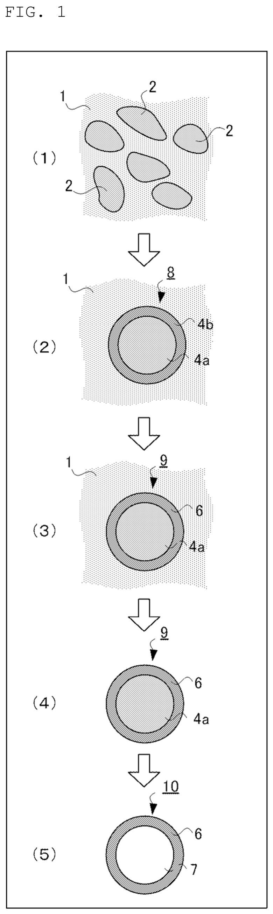

[FIG. 1] FIG. 1 is a diagram illustrating an example of the method for producing the hollow particles used in the present disclosure.

Description of Embodiments

Hereinafter, the fluorine rubber composition of the present disclosure and the crosslinked molded body of the present disclosure will be described in detail.

In the present disclosure, "to" which shows a numerical range is used to describe a range in which the numerical values described before and after "to" indicate the lower limit value and the upper limit value, both of which are included in the numerical range.

Also in the present disclosure, (meth)acrylate means each of acrylate and methacrylate; (meth)acryl means each of acryl and methacryl; and (meth)acryloyl means each of acryloyl and methacryloyl.

1. Fluorine rubber composition

The fluorine rubber composition of the present disclosure comprises hollow particles and a fluorine rubber,

wherein the hollow particles comprise a shell, which contains a resin, and a hollow portion surrounded by the shell, and the hollow particles have an iodine value of 10 g/100 g or more and 100 g/100 g or less, which is measured in accordance with JIS K 0070, and

wherein the fluorine rubber is a fluorine rubber that is crosslinkable by a peroxide.

The fluorine rubber composition of the present disclosure is used as a molding material for producing a crosslinked molded body. By the fluorine rubber composition of the present disclosure, a light-weight crosslinked molded body having a reduced compression set is provided.

Hereinafter the hollow particles, fluorine rubber and other components contained in the fluorine rubber composition will be described in detail.

[Hollow particles]

The hollow particles used in the present disclosure comprise a shell, which contains a resin, and a hollow portion surrounded by the shell, and the hollow particles have an iodine value of 10 g/100 g or more and 100 g/100 g or less, which is measured in accordance with JIS K 0070.

In the present disclosure, the iodine value measured in accordance with JIS K 0070 may be simply referred to as "iodine value".

The iodine value of the hollow particles can be used as the index of the amount of reactive unsaturated bonds present on the outer surface of the hollow particles. In general, the reactive unsaturated bonds are radically reactive, unsaturated bonds that cause an addition reaction by radicals. Since the hollow particles used in the present disclosure have an iodine value of 10 g/100 g or more, they have the reactive unsaturated bonds of a specific amount or more on the outer surface. When such hollow particles are added to the fluorine rubber and the fluorine rubber is crosslinked by the organic peroxide, the crosslinking reaction of the fluorine rubber is developed by the radicals generated from the organic peroxide, and the crosslinking reaction of the fluorine rubber with the reactive unsaturated bonds of the hollow particles is also developed. Accordingly, in the crosslinked molded body obtained by crosslinking molding the fluorine rubber composition of the present disclosure with an organic peroxide, since the fluorine rubber is crosslinked to the outer surface of the hollow particles, the adhesion between the hollow particles and the fluorine rubber at the interface therebetween is excellent, and the hollow particles and the fluorine rubber are less likely to be detached from each other at the interface therebetween. Also, compared to the fluorine rubber, the hollow particles show high resilience when external force is applied, and they are not likely to cause plastic deformation. The reason for the reduced compression set of the crosslinked molded body of the fluorine rubber composition of the present disclosure, is estimated as follows: since the fluorine rubber is crosslinked to the hollow particles, the fluorine rubber follows the restoration of the hollow particles when external force is applied. When the fluorine rubber is not crosslinked to the outer surface of the hollow particles, the plastic deformation of the fluorine rubber is not suppressed; therefore, the compression set is thought to increase.

In the crosslinked molded body of the fluorine rubber composition of the present disclosure, the hollow particles are less likely to collapse, and spaces can be easily retained. Accordingly, an excellent weight reduction effect is exerted by the hollow particles. The reason why the hollow particles are less likely to collapse is estimated as follows: due to the crosslinking between the fluorine rubber and the surface of the hollow particles, a three-dimensional crosslinking structure is formed in the vicinity of the surface of the hollow particles. It is also thought that due to the three-dimensional crosslinking structure, the Young's modulus of the crosslinked molded body increases and allows the compression set to be reduced or the abrasion resistance of the crosslinked molded body to be improved.

As just described, the hollow particles are effective in reducing the weight of the crosslinked molded body of the fluorine rubber composition of the present disclosure and reducing the compression set of the crosslinked molded body. In addition to the reduction of the weight of the crosslinked molded body and the reduction of the compression set, the hollow particles can impart various properties to the crosslinked molded body, such as heat insulation and retention of functional components (e.g., an antibacterial agent).

When the iodine value of the hollow particles is 10 g/100 g or more, sufficient amounts of crosslinks are formed between the hollow particles and the fluorine rubber. Accordingly, an excellent effect of reducing the compression set of the crosslinked molded body is exerted. The iodine value of the hollow particles used in the present disclosure is preferably 12 g/100 g or more, more preferably 15 g/100 g or more, still more preferably 20 g/100 g or more, and even more preferably 30 g/100 g or more.

Meanwhile, when there are too many reaction sites on the outer surface of the hollow particles, crosslinks are likely to be formed between the hollow particles. Accordingly, the hollow particles are likely to aggregate; the dispersibility of the hollow particles deteriorates; and the compression set of the crosslinked molded body cannot be sufficiently reduced. When the iodine value of the hollow particles used in the present disclosure is 100 g/100 g or less, sufficient amounts of crosslinks are formed between the fluorine rubber and the hollow particles, and the compression set of the crosslinked molded body can be reduced. From the viewpoint of reducing the compression set of the crosslinked molded body, the iodine value of the hollow particles used in the present disclosure is preferably 80 g/100 g or less, more preferably 70 g/100 g or less, and still more preferably 40 g/100 g or less.

The hollow particles used in the present disclosure comprise the shell (outer shell) which contains the resin and the hollow portion surrounded by the shell; moreover, they have the reactive unsaturated bonds on the outer surface of the shell.

As each of the reactive unsaturated bonds, examples include, but are not limited to, a reactive unsaturated bond contained in a vinyl group, a (meth)acryloyl group, an allyl group, a butenyl group, a maleimide group, a nadimide group, a propargyl group, an ethynyl group or the like. Each of the reactive unsaturated bonds is preferably an ethylenically unsaturated bond, more preferably an ethylenically unsaturated bond contained in at least one selected from the group consisting of a vinyl group, a (meth)acryloyl group and an allyl group, and still more preferably an ethylenically unsaturated bond contained in at least one selected from the group consisting of a vinyl group and a (meth)acryloyl group. A (meth) acryloyl group means each of an acryloyl group and a methacryloyl group.

In the hollow particles used in the present disclosure, the reactive unsaturated bond on the outer surface of the shell may be the reactive unsaturated bond of the crosslinkable monomer unit or may be the reactive unsaturated bond of a coupling agent used for surface treatment. It is preferably the reactive unsaturated bond of the crosslinkable monomer unit. That is, at least one polymerizable functional group of the crosslinkable monomer, which remains unreacted, is preferably present on the shell surface.

The crosslinkable monomer, coupling agent and so on used in the production of the hollow particles will be described in detail in "Method for producing the hollow particles".

The resin contained in the shell of the hollow particles used in the present disclosure, is typically the polymer of a polymerizable monomer used in the hollow particle production method described below. The shell of the hollow particles may further contain a surface treatment agent, an additive and so on, to the extent that does not impair the objects of the present disclosure. The content of the resin contained in the shell of the hollow particles used in the present disclosure, is preferably 80% by mass or more, more preferably 90% by mass or more, still more preferably 95% by mass or more and even more preferably 98% by mass or more. The shell may be composed of the resin.

The shell of the hollow particles used in the present disclosure may be such that the outer surface of a resin layer containing the polymer of the polymerizable monomer, is surface-treated with a coupling agent. The shell of the hollow particles used in the present disclosure is preferably surface-treated, since the mechanical properties of the crosslinked molded body of the present disclosure, such as tensile strength, tearing strength and abrasion resistance, are improved.

The hollow particles used in the present disclosure may have a polar group on the surface, such as an amino group and an acidic group. As the method for introducing the polar group to the particle surface, examples include, but are not limited to, the following: a method of reacting a modifier for introducing the polar group, a method of surface-treating the hollow particles with a coupling agent containing a polar group, and a method of using a polymerizable monomer containing a polar group.

In the hollow particles used in the present disclosure, the hollow portion is a hollow space clearly distinguished from the shell. The shell of the hollow particles may have a porous structure. In this case, the hollow portion has a size that is clearly distinguishable from many minute spaces uniformly dispersed in the porous structure.

From the viewpoint of weight reduction effect, the hollow portion of the hollow particles used in the present disclosure is preferably filled with gas such as air.

The hollow particles used in the present disclosure may have one hollow portion or two or more hollow portions. From the viewpoint of maintaining good balance between the high void ratio and the mechanical strength, the hollow particles preferably have only one or two hollow portions, and more preferably have only one hollow portion. In the hollow particles used in the present disclosure, the percentage of the number of the particles having only one hollow portion is preferably 90% or more, more preferably 95% or more, and still more preferably more than 95%.

The shell of the hollow particles used in the present disclosure and, when the hollow particles have two or more hollow portions, a partition separating the adjacent hollow portions from each other may be porous. From the viewpoint of reducing the compression set of the crosslinked molded body and improving the mechanical strength of the hollow particles, the shell and the partition are preferably solid.

The shape of the hollow particles used in the present disclosure may be a spherical shape, an ellipsoidal shape or an irregular shape, for example. From the viewpoint of the dispersibility and pressure resistance of the hollow particles, the shape is preferably a spherical shape.

An exemplary image of the shape of the hollow particles used in the present disclosure, is a bag which is made of a thin film and inflated with gas. A cross-section of the bag is like the hollow particle 10 shown in the diagram (5) of FIG. 1. In this example, one thin film is provided on the outside, and the interior is filled with gas.

The hollow portion of the hollow particles can be determined by, for example, SEM observation of a cross section of the particles or TEM observation of the particles as they are. The shape of the particles can be determined by SEM or TEM observation of the hollow particles, for example.

The hollow particles used in the present disclosure may contain, as impurities, small amounts of particles having a low circularity, such as cracked or deformed particles. From the viewpoint of weight reduction effect and from the viewpoint of reducing the compression set of the crosslinked molded body, in 100% by mass of the hollow particles, the percentage of the particles having a circularity of 0.85 or less is preferably less than 15% by mass, more preferably less than 10% by mass, and still more preferably less than 8% by mass.

The particles having a circularity of 0.85 or less are typically cracked particles or deformed particles such as dented particles. In the present disclosure, such particles may be referred to as "irregular-shaped particles". Such irregular-shaped particles have a low void ratio compared to spherical hollow particles; therefore, they have poor weight reduction effect. Accordingly, the weight reduction effect of the hollow particles can be improved by decreasing the percentage of the irregular-shaped particles included in the hollow particles. Also, the irregular-shaped particles have the following problem: compared to spherical particles, the irregular-shaped particles are poor in dispersibility since they are likely to aggregate when dispersed in the fluorine rubber. Therefore, the dispersibility of the hollow particles can be improved by decreasing the percentage of the irregular-shaped particles included in the hollow particles, and the compression set of the crosslinked molded body can be further reduced, accordingly. In addition, the irregular-shaped particles have the following problem: they are poor in pressure resistance compared to spherical particles, since external pressure is likely to be locally applied thereto. When the irregular-shaped particles are dispersed in the fluorine rubber, aggregates are likely to be formed; external pressure is likely to be applied to the aggregates; and the pressure resistance further deteriorates, accordingly. Therefore, the pressure resistance of the hollow particles can be improved by decreasing the percentage of the irregular-shaped particles included in the hollow particles.

The term "circularity" is defined as a value obtained by dividing the equivalent circular area diameter which is the diameter of a circle having the same area as the projected image of a particle, by the equivalent circular perimeter diameter which is the diameter of a circle having the same perimeter as the projected image of the particle. The circularity is 1 when the hollow particles are perfectly spherical, and it gets smaller as the surface shape of the hollow particles is more complex.

The average circularity of the hollow particles used in the present disclosure may be from 0.950 to 0.995.

In the present disclosure, the circularity is measured by use of a flow particle image analyzer at an image resolution of 0.185 um/pixel.

As the flow particle image analyzer, for example, IF-3200 (product name, manufactured by JASCO International Co., Ltd.) is preferably used. The measurement sample is prepared by, for example, performing a dispersion treatment of a mixture liquid, which is obtained by adding 0.10 g to 0.12 g of the hollow particles to an aqueous solution of linear alkylbenzene sulfonate (concentration 0.3%), in an ultrasonic cleaner for 5 minutes.

The average circularity is the average of the circularities of randomly selected 1000 to 3000 particles.

The void ratio of the hollow particles used in the present disclosure is not particularly limited. From the viewpoint of weight reduction effect, it is preferably 60% or more, more preferably 65% or more, and still more preferably 70% or more. The upper limit of the void ratio of the hollow particles is not particularly limited. From the viewpoint of suppressing a decrease in the strength of the hollow particles and improving the collapse-resistance of the hollow particles, the void ratio is preferably 90% or less, more preferably 85% or less, and still more preferably 80% or less.

The void ratio of the hollow particles can be calculated from the apparent density $D_1$ and true density $D_0$ of the hollow particles.

A method for measuring the apparent density $D_1$ of the hollow particles is as follows. First, approximately 30 cm$^3$ of the hollow particles are introduced into a measuring flask with a volume of 100 cm$^3$, and the mass of the introduced hollow particles is precisely weighed. Next, the measuring flask into which the hollow particles are introduced, is precisely filled with isopropanol up to the marked line while care is taken so that air bubbles do not get in. The mass of the isopropanol added to the measuring flask is precisely weighed, and the apparent density $D_1$ (g/cm$^3$) of the hollow particles is calculated by the following formula (I).

$$\text{Apparent density } D_1$$
$$= [\text{Mass of the hollow particles}] / (100 - [\text{Mass of the isopropanol}] / [\text{Specific gravity of the isopropanol at the measuring temperature}]) \quad \text{Formula (I)}$$

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 cm$^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ (g/cm$^3$) of the hollow particles is calculated by the following formula (II).

True density $D_0$ = [Mass of the pulverized hollow particles] / (100 - [Mass of the isopropanol] / [Specific gravity of the isopropanol at the measuring temperature])          Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) from the apparent density $D_1$ and the true density $D_0$.

Void ratio (%) = 100 - (Apparent density $D_1$ / True density $D_0$) $\times$ 100          Formula (III)

The volume average particle diameter of the hollow particles used in the present disclosure is not particularly limited. The volume average particle diameter of the hollow particles is preferably 0.1 $\mu$m or more, and more preferably 1 $\mu$m or more as the lower limit. On the other hand, it is preferably 100 $\mu$m or less, more preferably 80 $\mu$m or less, and still more preferably 50 $\mu$m or less as the upper limit. When the volume average particle diameter of the hollow particles used in the present disclosure is equal to or more than the lower limit value, the aggregation of the hollow particles is suppressed, and the dispersibility thereof is improved. Accordingly, the effect of reducing the compression set of the crosslinked molded body improves. When the volume average particle diameter of the hollow particles used in the present disclosure is equal to or less than the upper limit value, a decrease in the specific surface area of the hollow particles is suppressed. As a result, a decrease in the interface between the hollow particles and the fluorine rubber is suppressed; the amount of the crosslinks formed between the hollow particles and the fluorine rubber is increased; and the effect of reducing the compression set of the crosslinked molded body is improved, accordingly.

The particle size distribution (volume average particle diameter (Dv) / number average particle diameter (Dp)) of the hollow particles is not particularly limited. It is preferably 1.05 or more and 1.30 or less, and more preferably 1.10 or more and 1.30 or less. When the particle size distribution is 1.30 or less, the effect of reducing the compression set of the crosslinked molded body tends to be excellent, and hollow particles such that performance slightly vary between the hollow particles, can be obtained. Also when the particle size distribution is 1.30 or less, the uniformity of the thickness of the product obtained by forming the crosslinked molded body of the present disclosure into a sheet, can be improved.

The volume average particle diameter (Dv) and number average particle diameter (Dp) of the hollow particles can be found as follows, for example. The particle diameter of the hollow particles is measured with a particle size distribution measuring device by the Coulter counter method; the number average and volume average of the particle diameters are calculated; and the obtained values can be used as the number average particle diameter (Dp) and volume average particle diameter (Dv) of the hollow particles. The particle size distribution is found by dividing the volume average particle diameter by the number average particle diameter. The Coulter counter method is a method for measuring the diameter of particles by the electric resistance method called the Coulter Principle.

The residual volatile component content of the hollow particles used in the present disclosure is not particularly limited, and it is preferably less than 100 ppm. When the residual volatile component content of the hollow particles is large, the residual volatile component is present on the outer surface of the hollow particles. The residual volatile component on the outer surface of the hollow particles interferes with the crosslinking reaction between the reactive unsaturated bonds on the outer surface of the hollow particles and the fluorine rubber. Accordingly, when the residual volatile component content of the hollow particles is large, the adhesion between the hollow particles and fluorine rubber contained in the crosslinked molded body deteriorates, resulting in an increase in the compression set of the crosslinked molded body. On the other hand, when the residual volatile component content of the hollow particles is less than 100 ppm, an increase in the compression set of the crosslinked molded body can be sufficiently suppressed. From the viewpoint of reducing the compression set of the crosslinked molded body, the residual volatile component content of the hollow particles used in the present disclosure is more preferably less than 50 ppm, and still more preferably less than 30 ppm.

In general, the residual volatile component is an organic compound having a molecular weight of 500 or less. As the residual volatile component, examples include, but are not limited to, a residual polymerizable monomer, a residual hydrophobic solvent, and a decomposition product of a polymerization initiator. Also, the residual volatile component content is the proportion of the mass of the residual volatile component contained in the hollow particles, with respect to the mass of the hollow particles.

The lower limit value of the residual volatile component content of the hollow particles used in the present disclosure, is not particularly limited. From the viewpoint of ease of production, it may be 1 ppm or more, may be 2 ppm or more, or may be 3 ppm or more, for example.

The residual volatile component content of the hollow particles can be measured by purge and trap gas chromatography (P&T/GC). In particular, the measurement method described below in "Examples" can be employed.

In the hollow particles used in the present disclosure, the total content of a surfactant and a water-soluble polymer stabilizer which are present on the outer surface of the particles (hereinafter, they are simply referred to as "surfactant and so on") is preferably 500 ppm or less, more preferably 200 ppm or less, still more preferably 100 ppm or less, and even more preferably 50 ppm or less. The water-soluble polymer stabilizer may be an organic or inorganic water-soluble polymer stabilizer. When the content of the surfactant and so on present on the outer surface of the hollow particles is equal to or less than the upper limit value, a decrease in the reactivity between the hollow particles and the fluorine rubber is suppressed, and the effect of reducing the compression set of the crosslinked molded body is improved. By using only an inorganic dispersion stabilizer in the hollow particles production process described below, the content of the surfactant and so on present on the surface of the hollow particles can be controlled to less than the measurement limit value.

In the present disclosure, the content of the surfactant and so on present on the outer surface of the hollow particles is the proportion of the mass of the surfactant and so on present on the outer surface of the hollow particles, with respect to the mass of the hollow particles. The surfactant and so on present on the outer surface of the hollow particles can be extracted by, for example, ultrasonic treatment of the hollow particles in water. The type and mass of the surfactant and so on extracted into water can be determined by the peak position and peak intensity of a $^1$H-NMR spectrum. In this method, the measurement limit of the amount of the surfactant and so on present on the surface of the hollow particles, is generally 0.05 ppm.

The thermal decomposition initiation temperature of the hollow particles used in the present disclosure is not particularly limited. From the viewpoint of heat resistance, it is preferably 345°C or more, and more preferably 350°C or more. The upper limit of the thermal decomposition initiation temperature of the hollow particles is not particularly limited. For example, it may be 400°C or less.

In the present disclosure, the thermal decomposition initiation temperature of the hollow particles can be measured as a 5% weight reduction temperature, using a TG-DTA device in a nitrogen atmosphere, in the condition of a nitrogen flow rate of 230 mL/min and a temperature increase rate of 10°C/min.

In the fluorine rubber composition of the present disclosure, the content of the hollow particles is not particularly limited. On the mass basis, with respect to 100 parts by mass of the fluorine rubber, the content of the hollow particles is preferably 1 part by mass or more, more preferably 2 parts by mass or more, still more preferably 3 parts by mass or more, and even more preferably 10 parts by mass or more as the lower limit, and it is preferably 50 parts by mass or less, more preferably 40 parts by mass or less, still more preferably 30 parts by mass or less, and even more preferably 20 parts by mass or less as the upper limit.

Also in the fluorine rubber composition of the present disclosure, the content of the hollow particles on the volumetric basis is not particularly limited. The content of the hollow particles is preferably 15% by volume or more, more preferably 20% by volume or more, and still more preferably 30% by volume or more as the lower limit, and it is preferably 70% by volume or less, more preferably 60% by volume or less, and still more preferably 50% by volume or less as the upper limit.

When the content of the hollow particles is equal to or more than the lower limit value, an excellent weight reduction effect and an excellent compression set reduction effect are exerted by the hollow particles. When the content of the hollow particles is equal to or less than the upper limit value, the fluorine rubber composition can be easily kneaded. In addition, a deterioration in the dispersibility of the hollow particles is suppressed, and an excellent compression set reduction effect is exerted by the hollow particles, accordingly. Also, the fluorine rubber can be sufficiently contained in the fluorine rubber composition, and the original properties of the fluorine rubber can be sufficiently retained in the fluorine rubber composition, accordingly.

[Method for producing the hollow particles]

The hollow particles used in the present disclosure are produced by, for example, the production method described below, which is based on the suspension polymerization method.

For example, an embodiment of the method for producing the hollow particles used in the present disclosure is a hollow particle production method comprising:

preparing a mixture liquid containing a polymerizable monomer, a hydrophobic solvent, a polymerization initiator, a dispersion stabilizer and an aqueous medium,
suspending the mixture liquid to prepare a suspension in which droplets of a monomer composition containing the polymerizable monomer, the hydrophobic solvent and the polymerization initiator are dispersed in the aqueous medium,
subjecting the suspension to a polymerization reaction to prepare a precursor composition in which precursor particles comprising a shell, which contains a resin, and a hollow portion, which is surrounded by the shell and filled with the hydrophobic solvent, are dispersed in the aqueous medium, and
removing the hydrophobic solvent from the precursor particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

In the production method, by suspending the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which the droplets of the monomer composition are dispersed in the aqueous medium is prepared, the droplets having a distribution structure such that the polymerizable monomer is distributed on the surface side and the hydrophobic solvent is distributed in the center. By subjecting the suspension to a polymerization reaction, a polymer starts to precipitate on the surface of the droplets of the monomer composition, and the polymerization reaction is further developed. Accordingly, the surface of the droplets is cured to form the shell, thereby obtaining the hollow particles having the hollow portion filled with the hydrophobic solvent.

The reactive unsaturated bonds can be introduced to the outer surface of the shell by incorporating the crosslinkable monomer in the mixture liquid.

The above-described production method includes the steps of preparing the mixture liquid, preparing the suspension, subjecting the suspension to a polymerization reaction, and removing the hydrophobic solvent. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (for example, the mixture liquid may be suspended while adding the materials for the mixture liquid).

A preferred embodiment of the method for producing the hollow particles may be a production method including the following steps.

(1) Mixture liquid preparation step

The mixture liquid preparation step includes preparing a mixture liquid containing a polymerizable monomer, a hydrophobic solvent, a polymerization initiator, a dispersion stabilizer and an aqueous medium.

(2) Suspension step

The suspension step includes suspending the mixture liquid to prepare a suspension in which droplets of a monomer composition containing the polymerizable monomer, the hydrophobic solvent and the polymerization initiator are dispersed in the aqueous medium.

(3) Polymerization step

The polymerization step includes subjecting the suspension to a polymerization reaction to prepare a precursor composition in which precursor particles comprising a shell, which contains a resin, and a hollow portion, which is surrounded by the shell and filled with the hydrophobic solvent, are dispersed in the aqueous medium.

(4) Solid-liquid separation step

The solid-liquid separation step includes performing solid-liquid separation to obtain a solid component containing the precursor particles or the hollow particles.

(5) Solvent removal step

The solvent removal step includes removing the hydrophobic solvent from the precursor particles to obtain the hollow particles.

FIG. 1 is a schematic diagram showing an example of the production method of the present disclosure. The diagrams (1) to (5) in FIG. 1 correspond to the steps (1) to (5) described above, respectively. In the method shown in FIG. 1, the solvent removal step is carried out after the solid-liquid separation step. However, the solid-liquid separation step may be carried out after the solvent removal step. In FIG. 1, white arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable monomer, the hydrophobic solvent and the polymerization initiator.

The diagram (2) of FIG. 1 is a schematic cross-sectional view showing an embodiment of the suspension in the suspension step. The suspension contains the aqueous medium 1 and droplets 8 of the monomer composition dispersed in the aqueous medium 1. The droplets 8 of the monomer composition contain the polymerizable monomer, the hydrophobic solvent and the polymerization initiator, and their distribution in the droplets is not uniform. The droplets 8 of the monomer composition have the following structure: phase separation occurs between a hydrophobic solvent 4a and a material 4b containing the polymerizable monomer and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition obtained by the polymerization step, which contains the precursor particles which include the hydrophobic solvent in the hollow portion. The precursor composition contains the aqueous medium 1 and precursor particles 9 which include the hydrophobic solvent 4a in the hollow portion and which are dispersed in the aqueous medium 1. A shell 6 forming the outer surface of the precursor particles 9 is formed by polymerization of the polymerizable monomer contained in the droplets 8 of the monomer composition. The precursor particles 9 contain, as the resin, the polymer of the polymerizable monomer.

The diagram (4) of FIG. 1 is a schematic cross-sectional view showing an embodiment of the precursor particles after the solid-liquid separation step. The diagram (4) of FIG. 1 shows a state where the aqueous medium 1 has been removed from the state shown in the diagram (3) of FIG. 1.

The diagram (5) of FIG. 1 is a schematic cross-sectional view showing an embodiment of the hollow particles after the solvent removal step. The diagram (5) of FIG. 1 shows a state where the hydrophobic solvent 4a has been removed from the state shown in the diagram (4) of FIG. 1. By the removal of the hydrophobic solvent from the precursor particles, hollow particles 10 having a gas-filled hollow portion 7 in the interior of the shell 6, are obtained.

Hereinafter, the five steps described above and other steps are described in order.

(1) Mixture liquid preparation step

The mixture liquid preparation step includes preparing a mixture liquid containing a polymerizable monomer, a hydrophobic solvent, a polymerization initiator, a dispersion stabilizer and an aqueous medium. The mixture liquid may further contain other materials to the extent that does not impair the objects of the present disclosure.

The materials for the mixture liquid will be described in the following order: (A) the polymerizable monomer, (B) the hydrophobic solvent, (C) the polymerization initiator, (D) the dispersion stabilizer and (E) the aqueous medium.

(A) Polymerizable monomer

In the present disclosure, the polymerizable monomer is a compound containing an addition-polymerizable functional group (in the present disclosure, it may be simply referred to as "polymerizable functional group"). In the present disclosure, as the polymerizable monomer, a compound which contains an ethylenically unsaturated bond as the addition-polymerizable functional group, is generally used. The polymerizable functional group is preferably a radically polymerizable group. From the viewpoint of excellent reactivity, the polymerizable functional group is preferably at least one selected from the group consisting of a (meth)acryloyl group, a vinyl group and an allyl group, and more preferably at least one selected from the group consisting of a (meth)acryloyl group and a vinyl group.

In the present disclosure, a polymerizable monomer which has only one polymerizable functional group is referred to as a non-crosslinkable monomer, and a polymerizable monomer which has two or more polymerizable functional groups is referred to as a crosslinkable monomer. The crosslinkable monomer can form crosslinking in the polymer by polymerization reaction. The crosslinkable monomer becomes a crosslinkable monomer unit in the shell, and the non-crosslinkable monomer becomes a non-crosslinkable monomer unit in the shell.

Also in the present disclosure, a polymerizable monomer composed of the elements carbon and hydrogen is referred to as "hydrocarbon monomer"; a crosslinkable monomer composed of the elements carbon and hydrogen is referred to as "crosslinkable hydrocarbon monomer"; and a non-crosslinkable monomer composed of the elements carbon and hydrogen is referred to as "non-crosslinkable hydrocarbon monomer". Also in the present disclosure, a polymerizable monomer containing a (meth)acryloyl group as a polymerizable functional group is referred to as "acrylic monomer"; a crosslinkable monomer containing a (meth)acryloyl group as a polymerizable functional group is referred to as "crosslinkable acrylic monomer"; and a non-crosslinkable monomer containing a (meth)acryloyl group as a polymerizable functional group is referred to as "non-crosslinkable acrylic monomer". In the crosslinkable acrylic monomer, at least one polymerizable functional group is only required to be a (meth)acryloyl group, and all polymerizable functional groups are preferably (meth)acryloyl groups.

As the polymerizable monomer, a known polymerizable monomer that is conventionally used for the production of hollow polymer particles, can be used without particular limitation. From the viewpoint of controlling the iodine value of the hollow particles within the above range, the polymerizable monomer preferably contains at least a crosslinkable monomer. The iodine value of the hollow particles can be within the above range, since some of the reactive unsaturated bonds of the crosslinkable monomer remain unreacted on the outer surface of the shell.

When the crosslinkable monomer is contained as the polymerizable monomer, in the polymerization reaction of the suspension, the crosslinking density of the polymer precipitated on the surface of the droplets increases, and the precipitates are crosslinked. Accordingly, the crosslinking density of the shell can be increased. As a result, the shell excellent in strength is easily formed; the thus-obtained hollow particles tend to be spherical; and the hollow portion that is clearly distinguished from the shell is easily formed in the interior of the particles. As the shell strength improves, the hollow particles are less likely to cause plastic deformation. Accordingly, by improving the shell strength, the effect of reducing the compression set of the crosslinked molded body can be improved.

As the crosslinkable monomer, examples include, but are not limited to, the following: a crosslinkable hydrocarbon monomer such as an aromatic divinyl monomer (e.g., divinylbenzene, divinylbiphenyl and divinylnaphthalene) and a diene monomer (e.g., a linear or branched diolefin such as butadiene, isoprene, 2,3-dimethylbutadiene, pentadiene and hexadiene, and an alicyclic diolefin such as dicyclopentadiene, cyclopentadiene and ethylidene tetracyclododecene); a crosslinkable acrylic monomer such as a difunctional crosslinkable acrylic monomer (e.g., allyl (meth)acrylate, vinyl (meth)acrylate, ethylene glycol di(meth)acrylate, diethylene glycol di(meth)acrylate, pentaerythritol di(meth)acrylate, tricyclodecane dimethanol di(meth)acrylate, 3-(meth)acryloyloxy-2-hydroxypropyl (meth)acrylate, 1,3-bis(methacryloyloxy)-2-hydroxypropane, 1,6-hexanediol di(meth)acrylate, 1,9-nonanediol di(meth)acrylate, 1,10-decanediol di(meth)acrylate, neopentyl glycol di(meth)acrylate, polyethylene glycol di(meth)acrylate, polypropylene glycol di(meth)acrylate, bisphenol A di(meth)acrylate and ethoxylates thereof), and a trifunctional or higher-functional crosslinkable acrylic monomer (e.g., trimethylolpropane tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, dipentaerythritol poly (meth) acrylate and ethoxylates thereof); a crosslinkable allyl monomer such as diallyl phthalate; and a crosslinkable macromer (e.g., a polybutadiene, a polyisoprene, a styrenebutadiene block copolymer (SBS), a styrene-isoprene block copolymer (SIS), both-vinyl-terminated polyphenylene ether and both-(meth)acrylic-terminated polyphenylene ether). These crosslinkable monomers may be used alone or in combination of two or more.

In the present disclosure, from the viewpoint of controlling the iodine value of the hollow particles within the above range and from the viewpoint of reducing the compression set of the crosslinked molded body by improving the shell strength, the crosslinkable monomer preferably contains at least one selected from the group consisting of the crosslinkable acrylic monomer and the crosslinkable hydrocarbon monomer, and the crosslinkable monomer more preferably contains a combination of the crosslinkable acrylic monomer and the crosslinkable hydrocarbon monomer.

Among the crosslinkable monomers, the crosslinkable acrylic monomer is preferred from the viewpoint of improving the shell strength, while the crosslinkable hydrocarbon monomer is preferred since the reactive unsaturated bonds can be easily introduced to the outer surface of the shell.

Among crosslinkable hydrocarbon monomers, an aromatic divinyl monomer is preferred, and a divinylbenzene is particularly preferred.

As the crosslinkable acrylic monomer, any of the above-described difunctional crosslinkable acrylic monomer and the trifunctional or higher-functional crosslinkable acrylic monomer is preferred. From the viewpoint of improving the shell strength and reducing the compression set of the crosslinked molded body, at least the difunctional crosslinkable acrylic monomer is preferably contained, and a combination of the difunctional crosslinkable acrylic monomer and the trifunctional or higher-functional crosslinkable acrylic monomer is more preferably contained. The difunctional crosslinkable acrylic monomer is preferably at least one selected from the group consisting of ethylene glycol di(meth)acrylate, diethylene glycol di(meth)acrylate and pentaerythritol di(meth)acrylate. The trifunctional or higher-functional crosslinkable acrylic monomer is preferably at least one selected from the group consisting of trimethylolpropane tri(meth)acrylate, ditrimethylolpropane tetra(meth)acrylate, pentaerythritol tri(meth)acrylate and pentaerythritol tetra(meth)acrylate.

In the present disclosure, from the viewpoint of controlling the iodine value of the hollow particles within the above range and from the viewpoint of reducing the compression set of the crosslinked molded body by improving the shell strength, the content of the crosslinkable monomer in 100% by mass of the polymerizable monomer is preferably 50% by mass or more, more preferably 70% by mass or more, still more preferably 90% by mass or more, and even more preferably 95% by mass or more. In the present disclosure, the polymerizable monomer may be composed of the crosslinkable monomer, or a non-crosslinkable monomer described below may be further contained as the polymerizable monomer. Accordingly, the content of the crosslinkable monomer in 100% by mass of the polymerizable monomer may be 99% by mass or less, may be 98% by mass or less, or may be 97% by mass or less, for example.

The content of each monomer in 100% by mass of the polymerizable monomer, corresponds to the content of each monomer unit in 100% by mass of all monomer units constituting the polymer contained in the shell.

From the viewpoint of controlling the iodine value of the hollow particles within the above range and from the viewpoint of reducing the compression set of the crosslinked molded body by improving the shell strength, the content of the crosslinkable hydrocarbon monomer in 100% by mass of the polymerizable monomer is preferably 10% by mass or more, more preferably 30% by mass or more, and still more preferably 40% by mass or more as the lower limit. On the other hand, the upper limit is not particularly limited and may be 100% by mass. The content is preferably 90% by mass or less, more preferably 80% by mass or less, still more preferably 70% by mass or less, even more preferably 60% by mass or less as the upper limit.

From the same viewpoint, the content of the crosslinkable acrylic monomer in 100% by mass of the polymerizable monomer is not particularly limited and may be 0% by mass as the lower limit, and it is preferably 10% by mass or more, more preferably 20% by mass or more, still more preferably 30% by mass or more, and even more preferably 40% by mass or more as the lower limit. It is preferably 90% by mass or less, more preferably 70% by mass or less, and still more preferably 60% by mass or less as the upper limit.

When the combination of the difunctional crosslinkable acrylic monomer and the trifunctional or higher-functional crosslinkable acrylic monomer is contained, from the viewpoint of controlling the iodine value of the hollow particles within the above range and from the viewpoint of reducing the compression set of the crosslinked molded body by improving the shell strength, with respect to a total of 100% by mass of the difunctional crosslinkable acrylic monomer and the trifunctional or higher-functional crosslinkable acrylic monomer, the content of the difunctional crosslinkable acrylic monomer is preferably 20% by mass or more, more preferably 30% by mass or more, and still more preferably 40% by mass or more as the lower limit. On the other hand, it is preferably 70% by mass or less, more preferably 60% by mass or less, and still more preferably 50% by mass or less as the upper limit.

From the viewpoint of controlling the iodine value of the hollow particles within the above range and from the viewpoint of reducing the compression set of the crosslinked molded body by improving the shell strength, when the crosslinkable monomer contains the crosslinkable acrylic monomer and the crosslinkable hydrocarbon monomer, with respect to a total of 100 parts by mass of the crosslinkable acrylic monomer and the crosslinkable hydrocarbon monomer, the content of the crosslinkable acrylic monomer is preferably 10 parts by mass or more, more preferably 20 parts by mass or more, still more preferably 30 parts by mass or more, and even more preferably 40 parts by mass or more as the lower limit. On the other hand, it is preferably 90 parts by mass or less, more preferably 70 parts by mass or less, and still more preferably 60 parts by mass or less as the upper limit.

In the present disclosure, from the viewpoint of controlling the iodine value of the hollow particles within the above range and from the viewpoint of reducing the compression set of the crosslinked molded body by improving the shell strength, in 100 parts by mass of the crosslinkable monomer, the total content of the crosslinkable acrylic monomer and the crosslinkable hydrocarbon monomer is preferably 80 parts by mass or more, more preferably 90 parts by mass or more, still more preferably 95 parts by mass or more, and even more preferably 99 parts by mass or more.

In the present disclosure, a non-crosslinkable monomer may be further contained as the polymerizable monomer.

As the non-crosslinkable monomer, examples include, but are not limited to, the following: a non-crosslinkable hydrocarbon monomer such as an aromatic monovinyl monomer (e.g., styrene, vinyl toluene, α-methylstyrene, p-methylstyrene, ethylvinylbenzene, ethylvinylbiphenyl and ethylvinylnaphthalene), a linear or branched monoolefin (e.g., ethylene, propylene and butylene) and an alicyclic monoolefin (e.g., vinylcyclohexane, norbornene, tricyclododecene and 1,4-methano-1,4,4a,9a-tetrahydrofluorene); a non-crosslinkable acrylic monomer such as methyl (meth) acrylate, ethyl (meth)acrylate, butyl (meth)acrylate, 2-ethylhexyl (meth)acrylate, lauryl (meth)acrylate), t-butylaminoethyl (meth)acrylate, glycidyl (meth)acrylate, 2-hydroxyethyl (meth)acrylate, 2-aminoethyl (meth)acrylate, (meth)acrylic acid, (meth)acrylamide, N-methylol (meth)acrylamide, N-butoxymethyl (meth)acrylamide, methoxypolyethylene glycol (meth) acrylate, ethoxypolyethylene glycol (meth)acrylate, propoxypolyethylene glycol (meth)acrylate, butoxypolyethylene glycol (meth)acrylate, hexaoxypolyethylene glycol (meth)acrylate, octoxypolyethylene glycol polypropylene glycol (meth)acrylate, lauroxypolyethylene glycol (meth)acrylate, stearoxypolyethylene glycol (meth)acrylate, phenoxypolyethylene glycol polypropylene glycol (meth)acrylate, polyethylene glycol mono(meth)acrylate, polypropylene glycol mono(meth)acrylate, polyethylene glycol propylene glycol mono(meth)acrylate, polyethylene glycol tetramethylene glycol (meth)acrylate, propylene glycol polybutylene glycol mono (meth) acrylate, and monoethylene glycol mono(meth)acrylate; a carboxylic acid vinyl ester monomer such as vinyl acetate; a halogenated aromatic vinyl monomer such as halogenated styrene; a vinyl halide monomer such as vinyl chloride; a vinylidene halide monomer such as vinylidene chloride; vinylpyridine; and a non-crosslinkable macromer such as mono-(meth)acrylic-terminated polystyrene and mono-(meth) acrylic-terminated polymethyl methacrylate. These non-crosslinkable monomers may be used alone or in combination of two or more.

The content of the non-crosslinkable monomer in 100% by mass of the polymerizable monomer is preferably 50% by mass or less, more preferably 30% by mass or less, still more preferably 10% by mass or less, and even more preferably 5% by mass or less, from the viewpoint of controlling the iodine value of the hollow particles within the above range and from the viewpoint of suppressing a decrease in the shell strength. The lower limit of the content of the non-crosslinkable monomer in 100% by mass of the polymerizable monomer, is not particularly limited. For example, it may be 1% by mass or more, may be 2% by mass or more, or may be 3% by mass or more.

The content of the polymerizable monomer in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the content of the polymerizable monomer is preferably from 15% by mass to 50% by mass, and more preferably from 20% by mass to 40% by mass.

From the viewpoint of suppressing a decrease in the strength of the obtained hollow particles, the content of the polymerizable monomer is preferably 96% by mass or more, and more preferably 97% by mass or more, with respect to the total mass (100% by mass) of a solid content obtained by excluding the hydrophobic solvent from the material for the oil phase in the mixture liquid.

In the present disclosure, the solid content includes all components excluding solvent, and a liquid polymerizable monomer and the like are included in the solid content.

(B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition. In the end, according to their respective polarities, the hydrophobic solvent is distributed in the interior of the droplets of the monomer composition, and the material not containing the hydrophobic solvent is distributed at the periphery of the droplets of the monomer composition.

Then, in the polymerization step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

The hydrophobic solvent can be appropriately selected from the group consisting of known hydrophobic solvents, without particular limitation. As the hydrophobic solvent, examples include, but are not limited to, an ester such as ethyl acetate and butyl acetate; an ether ester such as propylene glycol monomethyl ether acetate and propylene glycol monoethyl ether acetate; and a hydrocarbon solvent. Of them, a hydrocarbon solvent is preferred, and a hydrocarbon solvent containing 5 to 8 carbon atoms is more preferred.

As the hydrocarbon solvent, examples include, but are not limited to, an aromatic hydrocarbon solvent such as benzene, toluene and xylene, and aliphatic hydrocarbons including a chain hydrocarbon solvent such as pentane, hexane, heptane, octane, 2-methylbutane, 2-methylpentane and a paraffin-based solvent, and a cyclic hydrocarbon solvent such as cyclohexane, methylcyclohexane and cycloheptane.

These hydrophobic solvents may be used alone or in combination of two or more.

From the point of view that phase separation is likely to occur between the polymerizable monomer and hydrophobic solvent in the droplets of the monomer composition during the suspension step, such an organic solvent is preferably selected as the hydrophobic solvent, that the water solubility of the organic solvent is smaller than that of the crosslinkable monomer contained in the polymerizable monomer.

When the polymerizable monomer contains the hydrocarbon monomer, the hydrophobic solvent is preferably a hydrocarbon solvent, more preferably a chain hydrocarbon solvent, still more preferably a chain hydrocarbon solvent containing 5 to 8 carbon atoms, and even more preferably at least one selected from the group consisting of pentane, hexane, heptane and octane.

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing more than one kind of hydrophobic solvent and it has more than one boiling point, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity of the hydrophobic solvent at 20°C is preferably 2.5 or less. The relative permittivity is one of the indices of the level of the polarity of a compound. In the case where the hydrophobic solvent has a sufficiently small relative permittivity of 2.5 or less, it is considered that phase separation progresses rapidly in the droplets of the monomer composition and the hollow portion can be easily formed.

Examples of hydrophobic solvents having a relative permittivity at 20°C of 2.5 or less, are as follows. The inside of the parentheses is the value of relative permittivity.

Pentane (1.8), hexane (1.9), heptane (1.9), octane (1.9), cyclohexane (2.0)

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the polymerizable monomer and so on include the hydrophobic solvent. Accordingly, as the content of the hydrophobic solvent increases, the void ratio of the obtained hollow particles tends to increase.

In the present disclosure, with respect to 100 parts by mass of the polymerizable monomer, the content of the hydrophobic solvent in the mixture liquid is preferably 100 parts by mass or more and 650 parts by mass or less, from the following viewpoints: the particle diameter of the hollow particles can be easily controlled; the void ratio can be easily increased while maintaining the strength of the hollow particles; and the amount of the residual hydrophobic solvent in the hollow particles can be easily decreased. The content of the hydrophobic solvent in the mixture liquid is more preferably 120 parts by mass or more and 500 parts by mass or less, and still more preferably 140 parts by mass or more and 300 parts by mass or less, with respect to 100 parts by mass of the polymerizable monomer.

(C) Polymerization initiator

In the production method of the present disclosure, the mixture liquid preferably contains an oil-soluble polymerization initiator as the polymerization initiator. The oil-soluble polymerization initiator is not particularly limited, as long as it is a lipophilic one having a solubility in water of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile).

With respect to 100 parts by mass of the polymerizable monomer in the mixture liquid, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the polymerization initiator is equal to or more than the lower limit value, a polymerization reaction can progress sufficiently. When the content of the polymerization initiator is equal to or less than the upper limit value, the polymerization initiator is less likely to remain after the end of the polymerization reaction, and an unexpected side reaction is less likely to progress.

(D) Dispersion stabilizer

The dispersion stabilizer is an agent for dispersing the droplets of the monomer composition in the aqueous medium in the suspension step. As the dispersion stabilizer, examples include, but are not limited to, an inorganic dispersion stabilizer, an organic or inorganic water-soluble polymer stabilizer and a surfactant.

In the present disclosure, an inorganic dispersion stabilizer is preferably used as the dispersion stabilizer, from the following viewpoints: the particle diameter of the droplets can be easily controlled in the suspension, and the dispersion stabilizer can be easily removed by the washing step; moreover, an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron (II) hydroxide; and silicon dioxide. These inorganic dispersion stabilizers may be used alone or in combination of two or more.

As the inorganic dispersion stabilizer, a sparingly water-soluble inorganic dispersion stabilizer is preferably used. The term "sparingly water-soluble" is preferably such that the solubility in water at 25°C is less than 1 g/L.

As the sparingly water-soluble inorganic dispersion stabilizer, a metal hydroxide is preferred, and a magnesium hydroxide is more preferred.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the inorganic dispersion stabilizer can be easily removed by the washing step described below.

The colloidal dispersion containing the sparingly water-soluble inorganic dispersion stabilizer colloidal particles can be prepared by, for example, reacting at least one selected from the group consisting of alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred.

The method for reacting the water-soluble polyvalent metal salt with the at least one selected from the group consisting of alkali metal hydroxide salts and alkaline earth metal hydroxide salts in the aqueous medium, is not particularly limited. For example, an aqueous solution of the water-soluble polyvalent metal salt may be mixed with an aqueous solution of the at least one selected from the group consisting of alkali metal hydroxide salts and alkaline earth metal hydroxide salts.

Also, colloidal silica may be used as the colloidal dispersion containing the sparingly water-soluble inorganic dispersion stabilizer colloidal particles.

As the organic water-soluble polymer stabilizer, examples include, but are not limited to, polyvinyl alcohol, a polycarboxylic acid (such as polyacrylic acid), a cellulose (such as hydroxyethyl cellulose, carboxymethyl cellulose, methyl cellulose and ethyl cellulose), polyvinylpyrrolidone, polyacrylimide, polyethylene oxide and a poly(hydroxystearic acid-g-methyl methacrylate-co-methacrylic acid) copolymer.

As the inorganic water-soluble polymer stabilizer, examples include, but are not limited to, sodium tripolyphosphate.

The surfactant is a compound containing both a hydrophilic group and a hydrophobic group per molecule. As the surfactant, examples include, but are not limited to, a conventionally-known ionic surfactant such as an anionic surfactant, a cationic surfactant and an amphoteric surfactant, and a conventionally-known non-ionic surfactant.

For the water-soluble polymer stabilizer and the surfactant, the solubility in water at 25°C is 1 g/L or more.

The content of the dispersion stabilizer is not particularly limited. With respect to the total mass (100 parts by mass) of the polymerizable monomer and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is preferably from 0.5 parts by mass to 15 parts by mass, and more preferably from 0.5 parts by mass to 10 parts by mass.

In the present disclosure, from the viewpoint of suppressing a deterioration in the reactivity between the hollow particles and the fluorine rubber, the amount of the residual dispersion stabilizer is preferably as small as possible. The hollow particles are most preferably free of the dispersion stabilizer. The hollow particles containing neither the water-soluble polymer stabilizer nor the surfactant are particularly preferred. By using only the inorganic dispersion stabilizer as the dispersion stabilizer, the hollow particles in which both the water-soluble polymer stabilizer and the surfactant are below the detection limit, can be obtained.

(E) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol, tetrahydrofuran (THF), and dimethyl sulfoxide (DMSO).

The content of the aqueous medium is not particularly limited. From the viewpoint of controlling the particle diameter and void ratio of the hollow particles in the preferred ranges described below, with respect to 100 parts by mass of the polymerizable monomer contained in the mixture liquid, the content of the aqueous medium is, as the lower limit thereof, preferably 200 parts by mass or more, more preferably 400 parts by mass or more, and still more preferably 600 parts by mass or more. The content is, as the upper limit thereof, preferably 1000 parts by mass or less, and more preferably 800 parts by mass or less.

The mixture liquid may further contain other materials that are different from the above-mentioned materials (A) to (E), to the extent that does not impair the objects of the present disclosure.

The mixture liquid is obtained by mixing the above-mentioned materials and other materials as needed, appropriately stirring the mixture, etc. In the mixture liquid, an oil phase containing lipophilic materials such as (A) the polymerizable monomer, (B) hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the polymerizable monomer, the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles in which the composition of the shell portion is uniform, can be produced. Also, the particle diameter of the hollow particles can be easily controlled.

(2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited, and a known suspension method can be employed. A disperser is used to prepare the suspension. As the disperser, for example, a horizontal or vertical in-line disperser such as MILDER (manufactured by Pacific Machinery & Engineering Co., Ltd.), CAVITRON (manufactured by EUROTEC, Ltd.) and an in-line disperser manufactured by IKA (e.g., DISPAX-REACTOR (registered trademark) DRS) or an emulsifying disperser such as HOMOMIXER MARK II series (manufactured by PRIMIX Corporation) can be used.

In the dispersion for the preparation of the suspension, from the viewpoint of forming the hollow portion and controlling the volume average particle diameter of the hollow particles within the above-described preferred range, the rotational frequency of the disperser is preferably 100 rpm or more, more preferably 200 rpm or more, and still more preferably 300 rpm or more. On the other hand, from the viewpoint of decreasing the amount of the irregular-shaped particles, it is preferably 30000 rpm or less, more preferably 10000 rpm or less, and still more preferably 5000 rpm or less.

In the suspension prepared in the suspension step, the droplets of the monomer composition containing the lipophilic materials mentioned above and having a particle diameter of approximately from 0.1 μm to 100 um, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The droplets of the monomer composition dispersed in the aqueous medium are formed of the oil-soluble monomer composition and the dispersion stabilizer surrounding the periphery of the oil-soluble monomer composition. The droplets of the monomer composition contain the oil-soluble polymerization initiator, the polymerizable monomer and the hydrophobic solvent.

The droplets of the monomer composition are minute oil droplets, and the oil-soluble polymerization initiator generates polymerization initiating radicals in the interior of the minute oil droplets. Therefore, the precursor particles having a target particle diameter can be produced without an excessive growth of the minute oil droplets.

In the suspension polymerization method using such an oil-soluble polymerization initiator, there is no opportunity for the polymerization initiator to come into contact with the polymerizable monomer dispersed in the aqueous medium. Therefore, by using the oil-soluble polymerization initiator, the subgeneration of surplus resin particles (e.g., solid particles having a relatively small particle diameter) in addition to the target hollow particles, can be suppressed.

(3) Polymerization step

The polymerization step includes subjecting the suspension to a polymerization reaction to prepare the precursor composition in which the precursor particles comprising the shell which contains the resin and the hollow portion which is surrounded by the shell and filled with the hydrophobic solvent, are dispersed in the aqueous medium. The precursor particles are formed by polymerization of the polymerizable monomer contained in the droplets of the monomer composition, and the shell of the precursor particles contains the polymer of the polymerizable monomer as the resin.

The polymerization system is not particularly limited. For example, a batch system, a semicontinuous system or a continuous system may be employed.

The polymerization temperature is preferably from 40°C to 90°C, and more preferably from 50°C to 80°C.

The polymerization reaction time is preferably from 1 hour to 48 hours, and more preferably from 1 hour to 36 hours.

In the polymerization step, the shell portion of the droplets of the monomer composition, which contain the hydrophobic solvent in the interior, polymerizes. Accordingly, as described above, the hollow portion filled with the hydrophobic solvent is formed in the interior of the obtained precursor particles.

(4) Solid-liquid separation step

The solid-liquid separation step includes performing solid-liquid separation of the slurry which contains the precursor particles or the hollow particles to obtain a solid component containing the precursor particles or the hollow particles. The solid-liquid separation step may be performed on the precursor composition containing the precursor particles, which is obtained by the above-described polymerization step, or on the aqueous dispersion of the hollow particles, which is obtained after the solvent removal step described below.

The method of performing the solid-liquid separation is not particularly limited, and a known method may be used. As the solid-liquid separation method, examples include, but are not limited to, a centrifugation method, a filtration method, and still-standing separation. Among them, a filtration method is preferred from the viewpoint of simplicity of the operation and high removal efficiency of the dispersion stabilizer.

When the solvent removal step is performed after the solid-liquid separation step, any step such as a preliminary drying step may be performed at a time after the solid-liquid separation step and before the solvent removal step. In the case of performing the solid-liquid separation step after the solvent removal step, any step such as a drying step for removal of the residual aqueous medium, may be performed after the solid-liquid separation step. The drying method employed in the preliminary drying step or the drying step is not particularly limited. Examples of the drying method include a method of drying the solid component obtained in the solid-liquid separation step, by use of a drying apparatus such as a dryer and a drying appliance such as a hand dryer.

(5) Solvent removal step

The solvent removal step includes removing the hydrophobic solvent from the precursor particles.

For example, after the solid-liquid separation step described above, the included hydrophobic solvent is removed from the precursor particles in a gaseous atmosphere. Accordingly, the hydrophobic solvent in the interior of the precursor particles is substituted with gas, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in the method of removing the hydrophobic solvent from the precursor particles in a gaseous atmosphere, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and the combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As another method, instead of subjecting the precursor composition obtained in the polymerization step, which is in the form of slurry, to solid-liquid separation, the included hydrophobic solvent may be removed from the precursor particles in the slurry containing the precursor particles and the aqueous medium.

In this method, for example, at a temperature equal to or more than the temperature obtained by subtracting 35°C from the boiling point of the hydrophobic solvent, an inert gas is bubbled into the precursor composition. Accordingly, the hydrophobic solvent can be removed from the precursor particles.

When the hydrophobic solvent is a mixed solvent containing more than one type of hydrophobic solvent and it has more than one boiling point, the boiling point of the hydrophobic solvent in the solvent removal step is determined as the boiling point of the solvent having the highest boiling point among the solvents contained in the mixed solvent, that is, the highest boiling point of the more than one boiling point.

The temperature at the time of bubbling the inert gas into the precursor composition, is preferably a temperature equal to or more than the temperature obtained by subtracting 30°C from the boiling point of the hydrophobic solvent, and more preferably a temperature equal to or more than the temperature obtained by subtracting 20°C from the boiling point of the hydrophobic solvent, from the viewpoint of reducing the amount of the residual hydrophobic solvent in the hollow particles. The temperature at the time of bubbling is generally set to a temperature equal to or more than the polymerization temperature of the polymerization step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrophobic solvent, the bubbling condition is appropriately controlled so that the hydrophobic solvent can be removed from the precursor particles. The bubbling condition is not particularly limited. For example, the inert gas may be bubbled in an amount of 1 L/min to 3 L/min for 1 hour to 10 hours.

By this method, a slurry of the hollow particles including an inert gas is obtained. The slurry is subjected to solid-liquid separation to obtain hollow particles, and the residual aqueous medium is removed from the hollow particles, thereby obtaining the hollow particles in which the hollow portion is occupied by gas.

The method for obtaining the hollow particles in which the hollow portion is filled with gas, by subjecting the precursor composition in the form of slurry to solid-liquid separation and then removing the hydrophobic solvent from the precursor particles in the gaseous atmosphere, is compared to the method for obtaining the hollow particles in which the hollow portion is filled with gas, by removing, in the slurry containing the precursor particles and the aqueous medium, the hydrophobic solvent from the precursor particles, subjecting the slurry to solid-liquid separation, and then removing the residual aqueous medium from the hollow particles in the gaseous atmosphere. As a result, the former method is advantageous in that the hollow particles are less likely to collapse in the hydrophobic solvent removal step, and the latter method is advantageous in that the amount of the residual hydrophobic solvent is decreased by bubbling the inert gas.

Also, the hydrophobic solvent included in the precursor particles may be removed therefrom without the solid-liquid separation of the slurry precursor composition obtained in the polymerization step, by use of the following method, for example: evaporating the hydrophobic solvent included in the precursor particles from the precursor composition at a predetermined pressure (a high, normal or reduced pressure), or evaporating the hydrophobic solvent included in the precursor particles from the precursor composition by introducing water vapor or inert gas such as nitrogen, argon and helium into the precursor composition at a predetermined pressure (a high, normal or reduced pressure).

(6) Other steps

In addition to the steps (1) to (5) mentioned above, the following surface treatment step (6-a), sieving step (6-b), washing step (6-c) and particle interior substitution step (6-d) may be added, for example.

(6-a) Surface treatment step

After the above-described polymerization step, the method for producing the hollow particles used in the present disclosure may include a surface treatment step in which the outer surface of the shell is surface-treated with a coupling agent.

The coupling agent contains, per molecule, a functional group that can be bound to organic matters and a functional group that can be bound to inorganic matters, and it can increase the affinity between organic and inorganic materials.

As the coupling agent, examples include, but are not limited to, a silane coupling agent, a titanium coupling agent and an aluminum coupling agent. Of them, a silane coupling agent is preferred.

As the silane coupling agent, examples include, but are not limited to, the following: an alkoxysilane containing a vinyl group, such as vinyltrimethoxysilane, vinyltriethoxysilane and vinyltris(β-methoxyethoxy)silane; an alkoxysilane containing a methacryloyl or acryloyl group, such as γ-acryloxypropyltrimethoxysilane and γ-methacryloxypropyltrimethoxysilane; an alkoxysilane containing an epoxy group, such as γ-glycidoxypropyltrimethoxysilane, β-(3,4-epoxycyclohexyl)ethyltrimethoxysilane and γ-glycidoxypropylmethyldiethoxysilane; an alkoxysilane containing an amino group, such as γ-aminopropyltriethoxysilane, N-β-(aminoethyl)γ-aminopropyltrimethoxysilane and N-β-(aminoethyl)γ-aminopropylmethyldimethoxysilane; an alkoxysilane containing a mercapto group, such as γ-mercaptopropyltrimethoxysilane; an alkoxysilane containing a halogen group, such as γ-chloropropyltrimethoxysilane; a silane containing a vinyl group and a halogen group, such as vinyltrichlorosilane; and methyltriacetoxysilane.

As the titanium coupling agent, examples include, but are not limited to, the following: isopropyl triisostearoyl titanate, isopropyl tridodecyl benzene sulfonyl titanate, isopropyl tris(dioctyl pyrophosphate) titanate, tetraisopropyl bis(dioctyl phosphite) titanate, tetraoctyl bis(ditridecylphosphite) titanate, tetra (2,2-diallyloxymethyl-1-butyl)bis(ditridecyl)phosphite titanate, bis(dioctyl pyrophosphate)oxyacetate titanate, bis(dioctyl pyrophosphate) ethylene titanate, isopropyl trioctanoyl titanate, isopropyl dimethacryl isostearoyl titanate, isopropyl isostearoyl diacryl titanate, isopropyl tri(dioctyl phosphate) titanate, isopropyl tri(N-amidoethyl amino ethyl) titanate, dicumylphenyloxyacetate titanate and diisostearoyl ethylene titanate.

As the aluminum coupling agent, examples include, but are not limited to, acetoalkoxy aluminum diisopropylate.

The coupling agent used in the present disclosure is preferably such an agent, that the functional group in the molecular structure thereof is a functional group which is crosslinkable to the fluorine rubber. As the functional group crosslinkable to the fluorine rubber, examples include, but are not limited to, a vinyl group and a (meth)acryloyl group.

The coupling agent is used as it is, or it is dissolved in a solvent before use.

(6-b) Sieving step (aggregate removal step)

The method for producing the hollow particles used in the present disclosure preferably includes a sieving step after the solvent removal step described above. Coarse powder particles and aggregates can be removed by the sieving step, and foreign materials can be easily removed, accordingly.

The sieving method is not particularly limited, and a known method can be employed. For example, sieving may be carried out with a metal mesh such as a stainless mesh or with a resin mesh such as a nylon mesh. More specifically, the hollow particles are put on the mesh; the mesh is vibrated; and the hollow particles passed through the mesh are obtained, thereby obtaining the hollow particles thus sieved. The size of the openings of the mesh used in the sieving step, is appropriately selected depending on the size of the hollow particles. The size of the openings is preferably a size such that the percentage of particles having a circularity of 0.85 or less is less than 15% by mass of the obtained hollow particles.

(6-c) Washing step

The washing step includes adding acid or alkali to the slurry containing the precursor particles or the hollow particles and washing the particles for removal of the dispersion stabilizer remaining in the precursor particles or the hollow particles. When the dispersion stabilizer used is an acid-soluble inorganic dispersion stabilizer, acid is preferably added to the slurry containing the precursor particles or the hollow particles to wash the particles. When the dispersion stabilizer used is an alkali-soluble inorganic compound, alkali is preferably added to the slurry containing the precursor particles or the hollow particles to wash the particles.

When the acid-soluble inorganic dispersion stabilizer is used as the dispersion stabilizer, the pH of the slurry containing the precursor particles or the hollow particles is preferably adjusted to 6.5 or less, and more preferably 6 or less, by adding acid to the slurry. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

(6-d) Particle interior substitution step

The particle interior substitution step includes substituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application.

[Fluorine rubber]

The fluorine rubber used in the present disclosure is a fluorine rubber that is crosslinkable by a peroxide. As the fluorine rubber crosslinkable by a peroxide, for example, a fluorine rubber containing a halogen atom having an atomic weight of 35 or more in a molecular chain thereof, can be used. In particular, a fluorine rubber containing at least one kind of halogen atom selected from the group consisting of iodine and bromine in a molecular chain thereof is preferably used, and a fluorine rubber containing bromine in a molecular chain thereof is particularly preferably used. When the halogen atom having an atomic weight of 35 or more is present in the molecular chain, by a radical generated from the organic peroxide during the crosslinking of the fluorine rubber, the halogen atom can be easily desorbed from the molecular chain; the fluorine rubber produces a highly active radical; and the highly active radical attaches to a crosslinking co-agent such as triallyl isocyanurate (TAIC) and allows efficient formation of crosslinks. In the fluorine rubber composition of the present disclosure, since the hollow particles have the reactive unsaturated bonds on the outer surface, they serve a similar function to the crosslinking co-agent. Accordingly, when the fluorine rubber is crosslinked by the organic peroxide, the fluorine rubber forms crosslinks also with the reactive unsaturated bonds on the surface of the hollow particles.

As the fluorine rubber that is crosslinkable by a peroxide, for example, a fluorine rubber obtained by introducing the halogen atom having an atomic weight of 35 or more into a copolymer of fluorine-containing polymerizable monomers, is preferably used.

As the fluorine-containing polymerizable monomer, examples include, but are not limited to, vinylidene fluoride, hexafluoropropylene (propylene hexafluoride), tetrafluoroethylene, pentafluropropylene, trifluoroethylene, trifluorochloroethylene, vinyl fluoride, perfluoromethyl vinyl ether, perfluoroethyl vinyl ether, perfluoropropyl vinyl ether, perfluoro acrylate and perfluoroalkyl acrylate.

The fluorine rubber used in the present disclosure may be copolymerized with a fluorine-free polymerizable monomer. As the fluorine-free polymerizable monomer which is copolymerizable with the fluorine-containing polymerizable monomer, examples include, but are not limited to, ethylene, propylene, butylene, alkyl carboxylic acid vinyl ester, alkyl vinyl ether, vinyl chloride, vinylidene chloride, acrylic acid and methacrylic acid.

When the fluorine rubber used in the present disclosure is copolymerized with the fluorine-free polymerizable monomer, the copolymerization ratio of the fluorine-containing polymerizable monomer in the fluorine rubber is preferably 40% by mass or more, more preferably 50% by mass or more, and still more preferably 60% by mass or more.

As the fluorine rubber used in the present disclosure, examples include, but are not limited to, a fluorine rubber obtained by introducing a halogen atom having an atomic weight of 35 or more into a fluorine rubber such as a tetrafluoroethylene propylene-based rubber (FEPM), a vinylidene fluoride-based rubber (FKM), a tetrafluoroethylene-perfluoromethyl vinyl ether-based rubber (FFKM) and a tetrafluoroethylene-based rubber (TFE). Of them, a fluorine rubber obtained by introducing a halogen atom having an atomic weight of 35 or more into a vinylidene fluoride-based rubber (FKM) is preferred. As the vinylidene fluoride-based rubber (FKM), a binary copolymer of vinylidene fluoride and hexafluoropropylene (a VdF-HFP copolymer), a ternary copolymer of vinylidene fluoride, hexafluoropropylene and tetrafluoroethylene (a VdF-HFP-TFE copolymer) or a ternary copolymer of vinylidene fluoride, hexafluoropropylene and perfluoroalkyl vinyl ether is particularly preferably used.

As described above, the fluorine rubber used in the present disclosure is preferably the fluorine rubber obtained by introducing, as a crosslinking reaction active site, the halogen atom having an atomic weight of 35 or more into the copolymer of the fluorine-containing polymerizable monomers. It is more preferably the fluorine rubber obtained by introducing at least one kind of halogen atom selected from the group consisting of iodine and bromine into the copolymer, and still more preferably the fluorine rubber obtained by introducing bromine into the copolymer.

The method for introducing the halogen atom into the copolymer of the fluorine-containing polymerizable monomers is not particularly limited. For example, the halogen atom can be introduced to the terminal(s) of the main chain of the copolymer of the fluorine-containing polymerizable monomers, by polymerization reaction in the presence of a halogen-terminated fluoro-alkyl or fluoro-alkylene compound. As the halogen-terminated fluoro-alkyl or fluoro-alkylene compound, examples include, but are not limited to, 1-bromoperfluoroethane, 1-bromoperfluoropropane, 1-bromoperfluorobutane, 1-bromoperfluoropentane, 1-bromoperfluorohexane, 1-iodoperfluoroethane, 1-iodoperfluoropropane, 1-iodoperfluorobutane, 1-iodoperfluoropentane and 1-iodoperfluorohexane. As the halogen-terminated fluoro-alkyl or fluoro-alkylene compound, examples also include, but are not limited to, 1-bromo-2-iodotetrafluoroethane, 1-bromo-3-iodoperfluoropropane, 1-bromo-4-iodoperfluorobutane, 2-bromo-3-iodoperfluorobutane, monobromomonoiodoperfluoropentane, monobromomonoiodoperfluoro-n-hexane, 1,2-dibromoperfluoroethane, 1,3-dibromoperfluoropropane, 1,4-diiodooctafluorobutane, 1,4-dibromoperfluorobutane, 1,5-dibromoperfluoropentane, 1,6-dibromoperfluorohexane, 1,2-diiodoperfluoroethane, 1,3-diiodoperfluoropropane, 1,4-diiodoperfluorobutane, 1,5-diiodoperfluoropentane and 1,6-diiodoperfluorohexane. These compounds can be used as a chain transfer agent.

Also, the halogen atom can be introduced to the inside or terminal(s) of the main chain of the copolymer of the fluorine-containing polymerizable monomers or to the side chain(s) of the copolymer, by polymerization reaction in the presence of a halogenated olefin. As the halogenated olefin, examples include, but are not limited to, 1-iodotrifluoroethylene, 1,1-difluoro-2-iodoethylene, 1,1-difluoro-2-bromoethylene, bromotrifluoroethylene, dibromotetrafluoropropylene, dibromodifluoroethylene, tribromotrifluoropropylene, hexabromopropylene, hexaiodopropylene, diiodotetrafluoropropylene, iodotetrafluorobutene, perfluoro(2-bromoethyl vinyl ether) and perfluoro(2-iodoethyl vinyl ether).

From the viewpoint of obtaining good reactivity, the fluorine rubber used in the present disclosure preferably has the halogen atom at the terminal(s) of the molecular chain.

In the fluorine rubber used in the present disclosure, the content of the halogen atom having an atomic weight of 35 or more is not particularly limited. From the viewpoint of reactivity, the content of the halogen atom is preferably 0.001% by mass or more, and more preferably 0.01% by mass or more. From the viewpoint of suppressing a deterioration in the properties of the fluorine rubber, the content is preferably 5% by mass or less, and more preferably 3% by mass or less.

The fluorine content rate of the fluorine rubber used in the present disclosure is not particularly limited, and it is preferably from 60% by mass to 75% by mass, and more preferably from 64% by mass to 70% by mass.

In the present disclosure, a commercially-available product may be used as the fluorine rubber that is crosslinkable by a peroxide. As the commercially-available product of the fluorine rubber that is crosslinkable by a peroxide, examples include, but are not limited to, the following: VITON (registered trademark) GAL series, GBL series, GF series, GLT series, GFLT series and ETP series (all manufactured by The Chemours Company) and DAI-EL (registered trademark) G-800 series, G-900 series and LT series (all manufactured by Daikin Industries, Ltd.) These commercially-available products are fluorine rubbers containing, as a crosslinking reaction active site, the halogen atom having an atomic weight of 35 or more in the molecular chain thereof.

The Mooney viscosity of the fluorine rubber used in the present disclosure is not particularly limited. From the viewpoint of ease of mixing and kneading, the Mooney viscosity at 121°C (ML(1+10)) is preferably from 10 to 150, more preferably from 15 to 100, and still more preferably from 20 to 70.

In the fluorine rubber composition of the present disclosure, the content of the fluorine rubber is not particularly limited. With respect to 100% by mass of the fluorine rubber composition, the content of the fluorine rubber is preferably 70% by mass or more, and more preferably 80% by mass or more as the lower limit, and it is preferably 99% by mass or less, more preferably 96% by mass or less, and still more preferably 90% by mass or less as the upper limit. When the content of the fluorine rubber is equal to or more than the lower limit value, the fluorine rubber composition can be easily kneaded, and the original properties of the fluorine rubber can be sufficiently retained in the fluorine rubber composition. When the content of the fluorine rubber is equal to or less than the upper limit value, the hollow particles can be sufficiently contained in the fluorine rubber composition; therefore, an excellent weight reduction effect and an excellent compression set reduction effect are exerted by the hollow particles.

In the present disclosure, as the fluorine rubber, one kind of fluorine rubber may be used alone, or two or more kinds of fluorine rubbers may be used in combination.

[Organic peroxide]

In the present disclosure, the organic peroxide is used as a crosslinking agent for the fluorine rubber. The fluorine rubber composition of the present disclosure may contain or may be free of the organic peroxide. When the fluorine rubber composition of the present disclosure does not contain the organic peroxide, the organic peroxide may be added to the fluorine rubber composition of the present disclosure when crosslinking molding the fluorine rubber composition.

As the organic peroxide, an organic peroxide that is generally used in the rubber industry as an organic peroxide for crosslinking fluorine rubber, can be used without particular limitation. As the organic peroxide, examples include, but are not limited to, a dialkyl peroxide such as 2,5-dimethyl-2,5-bis(t-butylperoxy)hexane, dicumyl peroxide, di-t-butyl peroxide, 2,5-dimethyl-2,5-di(t-butylperoxy)-3-hexyne, 1,3-bis(t-butylperoxy isopropyl)benzene and 1,1-di-t-butylperoxy-3,3,5-trimethylcyclohexane; a diacyl peroxide such as benzoyl peroxide and isobutyryl peroxide; a peroxy ester such as 2,5-dimethyl-2,5-bis(benzoylperoxy)hexane and t-butylperoxy isopropyl carbonate; and 1-isopropyl-2-(t-butylperoxy)benzene. Of them, a dialkyl peroxide is preferred.

These organic peroxides may be used alone or in combination of two or more.

The content of the organic peroxide is not particularly limited. With respect to 100 parts by mass of the fluorine rubber, the content of the organic peroxide is preferably 0.1 parts by mass or more, more preferably 0.2 parts by mass or more, and still more preferably 0.5 parts by mass or more as the lower limit, and it is preferably 10 parts by mass or less, more preferably 7 parts by mass or less, and still more preferably 5 parts by mass or less as the upper limit. When the content of the organic peroxide is equal to or more than the lower limit value, the fluorine rubber can be sufficiently crosslinked. When the content of the organic peroxide is equal to or less than the upper limit value, a deterioration in the properties of the crosslinked product, such as rubber elasticity, is suppressed.

[Crosslinking co-agent]

In the present disclosure, a crosslinking co-agent is generally used to crosslink the fluorine rubber. As with the organic peroxide described above, the crosslinking co-agent may be or may not be contained in the fluorine rubber composition of the present disclosure. When the fluorine rubber composition of the present disclosure does not contain the crosslinking co-agent, the crosslinking co-agent may be added to the fluorine rubber composition of the present disclosure when crosslinking molding the fluorine rubber composition.

As the crosslinking co-agent, a polyfunctional unsaturated compound can be used, such as triallyl isocyanurate, trimethallyl isocyanurate, triallyl cyanurate, triallyl trimellitate, N,N-m-phenylenebismaleimide, diallyl phthalate, tris(diallylamine)-s-triazine, triallyl phosphite, 1,2-polybutadiene, ethylene glycol diacrylate and diethylene glycol diacrylate. Of them, triallyl isocyanurate and trimethallyl isocyanurate are particularly preferred.

These crosslinking co-agents may be used alone or in combination of two or more.

The content of the crosslinking co-agent is not particularly limited. With respect to 100 parts by mass of the fluorine rubber, the content is preferably 0.1 parts by mass or more, more preferably 0.5 parts by mass or more, and still more preferably 1 part by mass or more as the lower limit. Accordingly, the fluorine rubber can be sufficiently crosslinked. The upper limit of the content of the crosslinking co-agent is not particularly limited. From the viewpoint of costs and reducing a deterioration in the properties of the crosslinked product, such as rubber elasticity, the upper limit of the content is preferably 10 parts by mass or less, more preferably 7 parts by mass or less, and still more preferably 5 parts by mass or less.

[Other components]

As needed, the fluorine rubber composition of the present disclosure may contain additives such as a plasticizer (a softening agent), a reinforcing agent, a filler, a processing aid, a lubricant, an antioxidant, a UV absorber, a foaming agent, an auxiliary foaming agent, a pigment, a colorant, a dispersant and a flame retardant, to the extent that does not impair the objects of the present disclosure.

The reinforcing agent, filler and so on contained in the fluorine rubber composition of the present disclosure may be surface-treated with the above-described coupling agent that are applicable to the hollow particles used in the present disclosure. At least one selected from the group consisting of the reinforcing agent and filler contained in the fluorine rubber composition of the present disclosure, is preferably surface-treated with the coupling agent, since the mechanical properties of the crosslinked molded body, such as tensile strength, tensile stress, tearing strength and abrasion resistance, are improved. More preferably, the hollow particles used in the present disclosure and at least one selected from the group consisting of the reinforcing agent and the filler, are surface-treated with the coupling agent.

As the plasticizer (softening agent), one that is generally used as a plasticizer or softening agent in rubber products or one that can impart flexibility can be used. As the plasticizer (softening agent), examples include, but are not limited to, the following: a petroleum softening agent such as process oil, lubricating oil, paraffin, liquid paraffin, petroleum asphalt and petrolatum; a coal tar-based softening agent such as coal tar and coal tar pitch; a fatty oil-based softening agent such as castor oil, linseed oil, canola oil and palm oil; tall oil; wax such as beeswax, carnauba wax and lanolin; fatty acid and fatty acid salt such as ricinoleic acid, palmitic acid, barium stearate, calcium stearate and zinc laurate; a synthetic polymer substance such as petroleum resin, atactic polypropylene and coumarone-indene resin; an ester-based plasticizer such as dioctyl phthalate, dioctyl adipate and dioctyl sebacate; a carbonate ester-based plasticizer such as diisododecyl carbonate; and other plasticizers such as microcrystalline wax, a rubber substitute (factice), liquid polybutadiene, modified liquid polybutadiene, liquid Thiokol and hydrocarbon-based synthetic lubricating oil. These plasticizers may be used alone or in combination of two or more.

The content of the plasticizer (softening agent) in the fluorine rubber composition is not particularly limited. With respect to 100 parts by mass of the fluorine rubber, it is generally from 10 parts by mass to 200 parts by mass, preferably from 35 parts by mass to 100 parts by mass, and more preferably from 45 parts by mass to 90 parts by mass.

The reinforcing agent is effective in improving the mechanical properties of the crosslinked molded body, such as tensile strength, tensile stress, tearing strength and abrasion resistance. It is estimated that in the crosslinked molded body containing the reinforcing agent, bound rubber is formed at the interface of the reinforcing agent, and these mechanical properties are improved, accordingly.

As the reinforcing agent, examples include, but are not limited to, silica, and carbon black such as SRF, GPF, FEF, FF, HAF, HAF-LS, HAF-HS, ISAF, ISAF-LS, ISAF-HS, SAF, FT and MT. As the silica, examples include, but are not limited to, natural silica such as quartz powder and silica stone powder, and synthetic silica such as silicic anhydride (e.g., silica-gel, AEROSIL), hydrous silicic acid, hydrous silicate and pulverized silicic acid. These reinforcing agents may be used alone or in combination of two or more.

The content of the reinforcing agent is not particularly limited. With respect to 100 parts by mass of the fluorine rubber, it is generally less than 230 parts by mass. From the viewpoint of improving the mechanical properties of the crosslinked molded body, with respect to 100 parts by mass of the fluorine rubber, the content of the reinforcing agent is preferably 1 part by mass or more, more preferably 3 parts by mass or more, and still more preferably 5 parts by mass or more. On the other hand, from the viewpoint of facilitating the kneading of the fluorine rubber composition, the content of the reinforcing agent is preferably 15 parts by mass or less, more preferably 12 parts by mass or less, and still more preferably 10 parts by mass or less.

As the carbon black, carbon black having a nitrogen adsorption specific surface area of 5 $m^2$/g or more and 150 $m^2$/g or less is preferably used. From the viewpoint of excellent compatibility with the fluorine rubber, carbon black having a nitrogen adsorption specific surface area of 5 $m^2$/g or more and less than 25 $m^2$/g is more preferably used. From the viewpoint of compatibility with the fluorine rubber, the nitrogen adsorption specific surface area of the carbon black is more preferably 5 $m^2$/g or more and 20 $m^2$/g or less, still more preferably 5 $m^2$/g or more and 15 $m^2$/g or less, and particularly preferably 5 $m^2$/g or more and 10 $m^2$/g or less.

The above-described exemplary carbon blacks have a nitrogen adsorption specific surface area in a range of from 5 $m^2$/g or more and 150 $m^2$/g or less. Of them, FT carbon (nitrogen adsorption specific surface area: 13 $m^2$/g) and MT carbon (nitrogen adsorption specific surface area: 7 $m^2$/g) are preferred since their nitrogen adsorption specific surface areas are 5 $m^2$/g or more and less than 25 $m^2$/g. MT carbon is particularly preferably used.

The nitrogen adsorption specific surface area of the carbon black is measured in accordance with JIS K6217-2.

As the reinforcing agent, at least one selected from the group consisting of the carbon black and silica is preferably used, since they are excellent in improving the mechanical properties of the crosslinked molded body. The carbon black is preferred, since it is particularly effective in improving the mechanical properties of the crosslinked molded body, and it is also effective in reducing the compression set of the crosslinked molded body. On the other hand, the crosslinked molded body is blackened when mixed with the carbon black. Therefore, in applications in which blackening of the crosslinked molded body is allowable, the carbon black is preferably used as the reinforcing agent. Meanwhile, in applications in which blackening of the crosslinked molded body is not allowable, silica is preferably used as the reinforcing agent. As just described, the type of the reinforcing agent may be appropriately selected depending on the intended application of the crosslinked molded body.

As described above, the reinforcing agent may be surface-treated with the coupling agent that is applicable to the hollow particles. In applications in which blackening of the crosslinked molded body is not allowable, a coupling agent-treated silica is particularly preferably used as the reinforcing agent.

As the filler, examples include, but are not limited to, an inorganic filler such as calcium carbonate, light calcium carbonate, heavy calcium carbonate, magnesium carbonate, talc, clay, glass beads and glass balloons, and an organic filler such as high-styrene resin, coumarone-indene resin, phenolic resin, lignin, modified melamine resin and petroleum resin. Of them, the inorganic filler is preferably used. These fillers may be used alone or in combination of two or more.

The content of the filler is not particularly limited. With respect to 100 parts by mass of the fluorine rubber, it is generally from 30 parts by mass to 200 parts by mass.

As the processing aid, examples include, but are not limited to, a higher fatty acid such as ricinoleic acid, stearic acid, palmitic acid and lauric acid; a salt of a higher fatty acid such as barium stearate, zinc stearate and calcium stearate; and an ester of a higher fatty acid such as ricinoleic acid, stearic acid, palmitic acid and lauric acid.

As the antioxidant, examples include, but are not limited to, an amine-based antioxidant, a hindered phenol-based antioxidant and a sulfur-based antioxidant.

As the lubricant, examples include, but are not limited to, compounds such as a hydrocarbon (e.g. liquid paraffin), a fatty acid (e.g. stearic acid), a fatty acid amide (e.g. amide stearate), an ester (e.g. butyl stearate) and an alcohol (e.g. stearyl alcohol), mixtures thereof, and metallic soap.

As the pigment, examples include, but are not limited to, an inorganic pigment such as titanium dioxide, zinc oxide, ultramarine blue, colcothar, lithopone, lead, cadmium, iron, cobalt, aluminum, hydrochloride and nitrate, and an organic pigment such as an azo pigment, a phthalocyanine pigment, a quinacridone pigment, a quinacridonequinone pigment, a dioxazine pigment, an anthrapyrimidine pigment, an anthanthrone pigment, an indanthrone pigment, a flavanthrone pigment, a perylene pigment, a perinon pigment, a diketopyrrolopyrrole pigment, a quinonaphthalone pigment, an anthraquinone pigment, a thioindigo pigment, a benzimidazolone pigment, an isoindoline pigment and carbon black.

[Applications of the fluorine rubber composition]

The fluorine rubber composition of the present disclosure is used as a molding material for producing the crosslinked molded body. The crosslinked molded body obtained by using the fluorine rubber composition of the present disclosure as the molding material and by employing a melt molding method or the like, may be a fluorine rubber part, an elastomer part integrally formed with another material part, a coating film, or a tipping material for filling, for example.

The crosslinked molded body obtained by crosslinking molding the fluorine rubber composition of the present disclosure, is a rubber product that is excellent in heat resistance, chemical resistance and oil resistance, since it contains the fluorine rubber as a main component. Also, it is a light-weight crosslinked molded body having a reduced compression set, since it contains the hollow particles.

As the applications of the crosslinked molded body produced by use of the fluorine rubber composition of the present disclosure, examples include, but are not limited to, various kinds of rubber parts used in various kinds of fields such as the automotive field, the electronics field, the electric field, the architecture field, the aviation field and the space field. More specifically, examples include, but are not limited to, an automotive part such as a hose, a packing, a tube, an O-ring, a gasket, a sealing material, a vibration isolation rubber and a weather strip; a building material such as a waterproof sheet and a sealing material; an electrical rubber part such as a high-voltage cable and a connector; an industrial product such as a heat-resistant conveyor belt, a chemical-resistant roller and a heat-resistant hose; and a sealing material for semiconductor production equipment, for chemical plants and for residence. A sealing material is especially required to have a small compression set, since the sealing properties of the material deteriorates when the material is plastically deformed. The crosslinked molded body containing the hollow particles used in the present disclosure is particularly preferably used in applications required to have a small compression set, such as a sealing material, since the compression set of the crosslinked molded body is reduced.

In addition, as the applications of the crosslinked molded body of the present disclosure, examples include, but are not limited to, the following: an overcoating or undercoating material which is required have heat insulation properties and shock-absorbing properties (cushioning properties), a shock-absorbing material (cushioning material) for footwears such as sports shoes and sandals, household appliance parts, stationery supplies and tools.

[Method for producing the fluorine rubber composition]

The method for producing the fluorine rubber composition of the present disclosure is not particularly limited, and a common method may be employed. As the method for producing the fluorine rubber composition of the present disclosure, examples include, but are not limited to, the following method: while the fluorine rubber is kneaded, the hollow particles, the organic peroxide, the crosslinking co-agent and other components added as needed are added thereto, and the mixed fluorine rubber is further kneaded, thereby preparing the fluorine rubber composition. Also, the following method can be used: a raw material mixture containing the fluorine rubber, the hollow particles, the organic peroxide, the crosslinking co-agent and other components added as needed is prepared, and the raw material mixture is kneaded, thereby preparing the fluorine rubber composition.

The kneading of the fluorine rubber or the raw material mixture is carried out at a temperature at which the fluorine rubber softens. As a kneader used for the kneading, a known kneader such as a uniaxial kneader, a biaxial kneader, a kneader, a Banbury mixer, a pressure kneader and a roll kneader can be used. The kneading is preferably kneading that can apply high shear force, such as roll kneading. For roll kneading, a two-mixing roll can be used as the kneader, such as MIXING ROLL DY6-15 (manufactured by Daihan, Co., Ltd.)

Also in the production of the fluorine rubber composition of the present disclosure, after pre-kneading the fluorine rubber at the temperature at which the fluorine rubber softens to uniformize the components of the fluorine rubber, finishing kneading of the base fluorine rubber may be performed with high shear force, such as roll kneading. Accordingly, the fluorine rubber composition in which the components are further uniformized and refined, can be obtained.

In the case of crosslinking molding the fluorine rubber composition, the fluorine rubber composition before being crosslinked can be recovered from a molding apparatus and reused as the raw material mixture.

The condition of kneading the fluorine rubber or the raw material mixture is not particularly limited. In the case of containing the organic peroxide, the kneading temperature is preferably less than the 10-hour half-life temperature of the organic peroxide. The kneading temperature is the preset temperature of the kneader. The kneading time is preferably one hour or less. In such kneading condition, the crosslinking reaction of the fluorine rubber can be prevented during kneading; scorching can be prevented; and the components can be uniformly mixed.

For example, the kneading can be carried out by the following method. Using a roll kneader, the kneading temperature is set to 70°C to 90°C. After the temperature of the kneader is stabilized, the fluorine rubber is fed into the kneader. Then, while rotating the rotor of the kneader at a rotational frequency of from 10 rpm to 35 rpm, the components such as the hollow particles and the organic peroxide are added in a desired order. After the end of the addition, all the materials are kneaded for 10 to 30 minutes. Accordingly, the fluorine rubber composition of the present disclosure is obtained.

2. Crosslinked molded body

The crosslinked molded body of the present disclosure is a molded body obtained by crosslinking molding the above-described fluorine rubber composition of the present disclosure with the organic peroxide.

By crosslinking molding the fluorine rubber composition of the present disclosure with the organic peroxide, the crosslinking reaction of the fluorine rubber proceeds; moreover, the crosslinking reaction of the fluorine rubber with the reactive unsaturated bonds of the hollow particles proceeds. Accordingly, the crosslinked molded body of the present disclosure is obtained.

The method for crosslinking molding the fluorine rubber composition is not particularly limited. It can be appropriately selected from known methods, depending on the shape of the target molded body, etc. Such known methods include, for example, melt molding methods such as extrusion molding, compression molding, extrusion lamination molding, injection molding, press molding and blow molding.

The crosslinking molding temperature of the fluorine rubber composition is not particularly limited. From the viewpoint of sufficiently developing the crosslinking reaction of the fluorine rubber and the crosslinking reaction between the hollow particles and the fluorine rubber, the crosslinking molding temperature is preferably equal to or more than the 10-hour half-life temperature of the organic peroxide. The upper limit of the crosslinking molding temperature of the fluorine rubber composition of the present disclosure is not particularly limited, and it is preferably equal to or less than the one minute half-life temperature of the organic peroxide. Also, after primary vulcanization is carried out by hot pressing at a temperature of from 100°C to 250°C, secondary vulcanization may be carried out by post curing at a temperature which is higher than the primary vulcanization temperature and which is equal to or less than 300°C. The primary vulcanization time may be from 1 minute to 180 minutes, for example. The secondary vulcanization time may be from 1 hour to 30 hours.

During the hot pressing, pressure is applied for crosslinking molding the fluorine rubber composition. The pressure is not particularly limited, and it may be from 1 MPa to 20 MPa, for example.

The form of the crosslinked molded body of the present disclosure is not particularly limited. For example, the fluorine rubber composition in a molten state may be molded into a form such as a long sheet form, a block form and a filler form, or it may be fabricated into a form such as a roll form (obtained by rolling up a long sheet) and a strip form (obtained by cutting a long sheet into a strip of predetermined length).

The compression set of the crosslinked molded body of the present disclosure, which is measured by the room temperature test in accordance with JIS K 6262:2013, is preferably less than 60%, more preferably less than 40%, and still more preferably less than 25%. The lower limit of the compression set of the crosslinked molded body of the present disclosure is not particularly limited, and it is generally 10% or more.

The compression set of the fluorine rubber composition of the present disclosure before the crosslinking molding, which is used as a material for molding the crosslinked molded body of the present disclosure, is generally 60% or more.

The 100% tensile stress of the crosslinked molded body of the present disclosure, which is measured according to JIS K 6251:2017, is preferably 2 MPa or more, more preferably 4 MPa or more, and still more preferably 6 MPa or more. The upper limit of the 100% tensile stress of the crosslinked molded body of the present disclosure is not particularly limited, and it is generally 30 MPa or less.

Examples

Hereinbelow, the present disclosure is described in more detail with reference to examples and comparative examples. However, the present disclosure is not limited to these examples. Also, "part" and "%" are on a mass basis unless otherwise specified.

<Production of hollow particles>

[Production Example 1 (hollow particles A)]

(1) Mixture liquid preparation step

First, the following materials were mixed to produce an oil phase.

Crosslinkable acrylic monomer: Ethylene glycol dimethacrylate 25 parts
Crosslinkable acrylic monomer: Trimethylolpropane trimethacrylate 30 parts
Crosslinkable hydrocarbon monomer: Divinylbenzene 45 parts
Oil-soluble polymerization initiator: 2,2'-azobis(2,4-dimethylvaleronitrile) 3 parts
Hydrophobic solvent: Hexane 160 parts

Meanwhile, in a stirring tank at room temperature, an aqueous solution in which 12.1 parts of sodium hydroxide (an alkali metal hydroxide) was dissolved in 121 parts of deionized water, was gradually added under stirring to an aqueous solution in which 17.1 parts of magnesium chloride (a water-soluble polyvalent metal salt) was dissolved in 494 parts of deionized water, thereby preparing a magnesium hydroxide (sparingly water-soluble metal hydroxide) colloidal dispersion (magnesium hydroxide: 4 parts). The dispersion was used as an aqueous phase.

The obtained aqueous phase and oil phase were mixed, thereby preparing a mixture liquid.

(2) Suspension step

The mixture liquid obtained in the mixture liquid preparation step was suspended by stirring with a disperser (product name: HOMOMIXER, manufactured by: PRIMIX Corporation) at a rotational frequency of 4,000 rpm for one minute, thereby preparing a suspension in which droplets of a monomer composition including the hydrophobic solvent were dispersed in water.

(3) Polymerization step

A polymerization reaction was carried out by stirring the suspension obtained in the suspension step for one and half hours in a nitrogen atmosphere at a temperature of 65°C, thereby obtaining a precursor composition in which precursor particles including the hydrophobic solvent were contained.

(4) Washing step and solid-liquid separation step

The precursor composition was washed with dilute sulfuric acid (25°C, 10 minutes) to bring the pH of the composition to 5.5 or less. Next, water was separated therefrom by filtration. Then, 200 parts of deionized water was added to reslurry the resultant, and a water washing treatment (washing, filtering and dehydrating) was repeatedly performed more than one times at room temperature (25°C). The resultant was separated by filtration, thereby obtaining a solid component. The obtained solid component was dried with a dryer at a temperature of 40°C, thereby obtaining precursor particles including the hydrophobic solvent.

(5) Solvent removal step

The precursor particles obtained in the solid-liquid separation step were subjected to heating treatment for 12 hours with a vacuum dryer in a nitrogen atmosphere at 200°C, thereby removing the included hydrophobic solvent from the particles. Accordingly, hollow particles were obtained.

(6) Sieving step

The hollow particles obtained in the solvent removal step were sieved with a nylon mesh having an opening size of 100 μm. The hollow particles passed through and dropped from the mesh were collected, thereby removing coarse particles therefrom and obtaining hollow particles A.

[Production Example 2 (hollow particles B)]

The hollow particles of Production Example 2 (hollow particles B) were obtained in the same manner as Production Example 1, except that in "(1) Mixture liquid preparation step", the amount of the polymerizable monomer added to the oil phase was changed according to Table 1.

[Production Example 3 (hollow particles C)]

The hollow particles of Production Example 3 (hollow particles C) were obtained in the same manner as Production Example 1, except that in "(2) Suspension step", the rotational frequency of the disperser was changed to 400 rpm.

[Production Example 4 (hollow particles D)]

The hollow particles of Production Example 4 (hollow particles D) were obtained in the same manner as Production Example 1, except that in "(1) Mixture liquid preparation step", the amount of the polymerizable monomer added to the oil phase was changed according to Table 1.

[Production Example 5 (hollow particles E)]

The hollow particles of Production Example 5 (hollow particles E) were obtained in the same manner as Production Example 1, except that in "(1) Mixture liquid preparation step", the polymerizable monomer added to the oil phase was changed to 100 parts of divinylbenzene only.

[Comparative Production Example 1 (solid particles A)]

The solid particles of Comparative Production Example 1 (solid particles A) were obtained in the same manner as Production Example 1, except that in "(2) Suspension step", the rotational frequency of the disperser was changed to 10 rpm.

[Evaluation for physical properties of particles]

The physical properties of the hollow particles obtained in Production Examples 1 to 5 and those of the solid particles obtained in Comparative Production Example 1 were evaluated as follows. The results of evaluating the physical properties of the particles are shown in Table 1.

1. Measurement of iodine value

The iodine value of the particles was measured in accordance with JIS K 0070. The details of the measurement method were as follows.

First, 0.7 g to 2 g of the particles (sample) and 10 mL of chloroform were put in a 300 mL iodine flask. In addition, 25 mL of Wijs reagent was added thereto as a reaction solution. After lightly stirring the mixture, the flask was sealed and then left to stand for 30 minutes in a dark place at 25°C. Next, 20 mL of a 100 g/L potassium iodide solution and 100 mL of purified water were added thereto, and the mixture was stirred. Titration was carried out by use of a buret and a titrant (a 0.1 mol/L sodium thiosulfate solution). An indicator (a 1% starch solution) was added when the solution turned light yellow. The titration was continued until the blue color disappeared, and this point of time was regarded as the endpoint. Separately from this main test, a blank test was performed on a solution that was free of the particles, and the iodine value of the particles was calculated by the following formula. The iodine value is a value obtained as follows: halogen is reacted with 100 g of a sample, and the amount of halogen thus binding to the sample is converted to the grams of iodine, thereby obtaining the iodine value.

$$\text{Iodine value (g/100 g)} = \{(V_0 - V_1) \times f \times 1.269\} / S$$

S: Mass (g) of the sample
$V_1$: Titrant amount (mL) in the main test
$V_0$: Titrant amount (mL) in the blank test
f: Factor of the titrant

2. Percentage of particles having one hollow portion

The particles were fixed on a carbon tape. The fixed particles were intentionally broken by rubbing them with a cotton swab. The interior of 100 of the broken particles was observed by SEM. The number of hollow portions per particle was specified, and the percentage (%) of the number of particles having only one hollow portion was calculated.

3. Percentage of irregular-shaped particles

A mixed solution was obtained by adding 0.10 g to 0.12 g of the particles to a linear alkylbenzene sulfonate aqueous solution (concentration 0.3%) and subjected to a dispersion treatment for 5 minutes by an ultrasonic cleaner, thereby preparing a measurement sample. Using a flow particle image analyzer (product name: IF-3200, manufactured by JASCO International Co., Ltd.), the particles contained in the measurement sample were measured for circularity in the following measurement conditions. The percentage by mass of the particles having a circularity of 0.85 or less was calculated and defined as the percentage of the irregular-shaped particles.

The number of the particles contained in the measurement sample increased as the particle diameter decreased. In all of the production examples, the number of the contained particles was within a range of from 1000 to 3000.

(Measurement conditions)

Thickness of the spacer of a flow cell: 50 $\mu$m
Telecentric zoom lens magnification: 4.5 x
Total magnification: 9.0 x
Measured amount: 0.5 mL
Image resolution: 0.185 $\mu$m/pixel
Detection algorithm: Ghost detection
Threshold: 15%

4. Residual volatile component content

The amount of the residual volatile component contained in the particles (the residual volatile component content) was obtained by the following purge and trap gas chromatography (P&T/GC) .

First, 0.1 g of the particles were put in a purge container. While flowing helium gas at a flow rate of 50 ml/min as a carrier gas, the purge container was started to be heated at a rate of 10°C/min from room temperature and kept at 200°C for 30 minutes. A volatile component thus produced was collected into a trap tube at -130°C. The collected residual volatile component was quantified to obtain the residual volatile component content (the amount of the residual volatile component contained in the particles).

As a measurement device, GAS CHROMATOGRAPH 6890 (FID) manufactured by Agilent Technologies was used. As an analysis device, C-R7A CHROMATOPAC (manufactured by Shimadzu Corporation) was used. As a purge & trap sampler, TDS manufactured by Agilent Technologies was used. As a column, DB-5 manufactured by J&W (L = 30 m, I.D. = 0.32 mm, Film = 0.25 $\mu$m) was used. Using them, the residual volatile component content was measured in the following conditions.

Column temperature: 50°C (kept for two minutes) to 270°C (increased by 10°C/min)
Sample feeding temperature: 280°C
Detection temperature: 280°C
Carrier gas: Helium gas, Flow rate: 1 ml/min

5. Particle diameter and particle size distribution

The particle diameter of the particles was measured by use of a particle size distribution measuring device by the Coulter counter method (product name: MULTISIZER 4e, manufactured by Beckman Coulter, Inc.) Then, the number average and the volume average were calculated therefrom to obtain the number average particle diameter (Dp) and the volume average particle diameter (Dv). By dividing the volume average particle diameter by the number average particle diameter, the particle size distribution (Dv/Dp) of the particles was obtained.

The measurement conditions were as follows.

Aperture diameter: 50 $\mu$m
Dispersion medium: ISOTON II (product name)
Concentration: 10%
Number of the measured particles: 100,000 particles

More specifically, 0.2 g of the sample particles were put in a beaker. As a dispersant, a surfactant aqueous solution (product name: DRIWEL, manufactured by Fujifilm Corporation) was added thereto. In addition, 2 mL of the dispersion medium was added to wet the particles. Then, 10 mL of the dispersion medium was added thereto. The mixture was dispersed for one minute with an ultrasonic disperser. Then, the measurement with the above-described particle size measuring device was carried out.

6. Void ratio

6-1. Measurement of apparent density of hollow particles

First, approximately 30 cm$^3$ of the hollow particles were introduced into a measuring flask with a volume of 100 cm$^3$, and the mass of the introduced hollow particles was precisely weighed. Next, the measuring flask into which the hollow particles were introduced, was precisely filled with isopropanol up to the marked line while care was taken so that air bubbles did not get in. The mass of the isopropanol added to the measuring flask was precisely weighed, and the apparent density $D_1$ (g/cm$^3$) of the hollow particles was calculated by the following formula (I).

Apparent density $D_1$ = [Mass of the hollow particles] / (100 - [Mass of the isopropanol] / [Specific gravity of the isopropanol at the measuring temperature])                 Formula (I)

6-2. Measurement of the true density of the hollow particles

The hollow particles were pulverized in advance; approximately 10 g of the pulverized hollow particles were introduced into a measuring flask with a volume of 100 cm$^3$; and the mass of the introduced pulverized particles was precisely weighed.
Then, similarly to the measurement of the apparent density mentioned above, isopropanol was added to the measuring flask; the mass of the isopropanol was precisely weighed; and the true density $D_0$ (g/cm$^3$) of the hollow particles was calculated by the following formula (II).

True density $D_0$ = [Mass of the pulverized hollow particles] / (100 - [Mass of the isopropanol] / [Specific gravity of the isopropanol at the measuring temperature])                 Formula (II)

6-3. Calculation of void ratio

The void ratio of the hollow particles was calculated by the following formula (III), using the apparent density $D_1$ and the true density $D_0$.

Void ratio (%) = 100 - (Apparent density $D_1$ / True density $D_0$) $\times$ 100                 Formula (III)

[Table 1]

Table 1

| | | | Production Example 1 | Production Example 2 | Production Example 3 | Production Example 4 | Production Example 5 | Comparative Production Example 1 |
|---|---|---|---|---|---|---|---|---|
| | | | Hollow particles A | Hollow particles B | Hollow particles C | Hollow particles D | Hollow particles E | Solid particles A |
| Polymerizable monomer | Crosslinkable acrylic monomer | Ethylene glycol dimethacrylate (parts) | 25 | 15 | 25 | 45 | | 25 |
| | | Trimethylolpropane trimethacrylate (parts) | 30 | 20 | 30 | 45 | | 30 |
| | Crosslinkable hydrocarbon monomer | Divinylbenzene (parts) | 45 | 65 | 45 | 10 | 100 | 45 |
| Polymerizable initiator | | 2,2'-azobis(2, 4 - dimethylvaleronitrile) (parts) | 3 | 3 | 3 | 3 | 3 | 3 |
| Hydrophobic solvent | | Hexane (parts) | 160 | 160 | 160 | 160 | 160 | 160 |
| Production condition | | Rotational frequency (rpm) of disperser | 4000 | 4000 | 400 | 4000 | 4000 | 10 |
| Properties of particles | | Iodine value (g/100 g) | 32 | 48 | 32 | 13 | 82 | 30 |
| | | Percentage (%) of particles having one hollow portion | More than 95 | More than 95 | More than 95 | More than 95 | More than 95 | Less than 5 |
| | | Percentage (%) of irregular-shaped particles | 5 | 7 | Less than 1 | 5 | 5 | 5 |
| | | Residual volatile component content (ppm) | 10 | 28 | 5 | 10 | 10 | 10 |
| | | Dv ($\mu$m) | 10 | 10 | 47 | 10 | 10 | 10 |
| | | Particle size distribution (Dv/Dp) | 1.10 | 1.20 | 1.25 | 1.20 | 1.20 | 1.10 |
| | | Void ratio (%) | 75 | 76 | 73 | 74 | 80 | Less than 5 |

<Production of fluorine rubber composition and crosslinked molded body>

[Example 1]

As the fluorine rubber that is crosslinkable by a peroxide, 100 parts of a fluorine rubber in which a ternary copolymer of vinylidene fluoride, hexafluoropropylene and tetrafluoroethylene was further copolymerized with olefin bromide to introduce bromine to the molecular chain thereof (product name: VITON (registered trademark) GBL-200S, manufactured by: The Chemours Company, fluorine content: 67% by mass, Mooney viscosity at 121°C (ML(1+10)): 25, specific gravity: 1.84) was charged into a two-mixing roll kneader (model: DY6-15, manufactured by: Daihan, Co., Ltd., roll diameter: 6 inches, roll clearance: 0.5 mm) kept at a temperature of 80°C. The rotational frequency of the rotor of the kneader was set to 10 rpm to 35 rpm, and the fluorine rubber was wound around the rolls. Then, 17.5 parts of the hollow particles A obtained in Production Example 1 were charged into the kneader. Next, as the crosslinking agent, 2 parts of PERHEXA (registered trademark) 25B-40 (manufactured by: NOF Corporation, compound name: 2,5-dimethyl-2,5-di(t-butylperoxy)hexane, 10-hour half-life temperature: 117.9°C, one minute half-life temperature: 179.8°C) and, as the crosslinking co-agent, 4 parts of triallyl isocyanurate (TAIC) were charged into the kneader. Accordingly, a mixture was obtained. The obtained mixture was kneaded for 15 minutes, thereby obtaining the fluorine rubber composition of Example 1.

By a hot press machine at 160°C, the obtained fluorine rubber composition was press-molded for 10 minutes at a pressure of 10 MPa into a columnar form having a diameter of 29 mm $\pm$ 0.5 mm and a height of 12.5 mm $\pm$ 0.5 mm. Then, the columnar molded body was subjected to secondary vulcanization (180°C, 4 hours), thereby obtaining the columnar crosslinked molded body of Example 1. The columnar crosslinked molded body thus obtained was used as a test piece in compression set measurement (JIS K 6262) described below.

Also, by a hot press machine at 160°C, the obtained fluorine rubber composition was press-molded for 10 minutes at a pressure of 10 MPa into a dumbbell No. 3 shape according to JIS K 6251. Then, the dumbbell-shaped molded body was subjected to secondary vulcanization (180°C, 4 hours), thereby obtaining the dumbbell-shaped crosslinked molded body of Example 1. The dumbbell-shaped crosslinked molded body thus obtained was used as a test piece in 100% tensile stress measurement (JIS K 6251) described below.

[Examples 2 and 3]

The fluorine rubber composition and crosslinked molded body of Examples 2 and 3 were obtained in the same manner as Example 1, except that the amount of the added hollow particles A obtained in Production Example 1, was changed according to Table 2.

[Examples 4 to 7]

The fluorine rubber composition and crosslinked molded body of Examples 4 to 7 were obtained in the same manner as Example 1, except that according to Table 2, the hollow particles B obtained in Production Example 2, the hollow particles C obtained in Production Example 3, the hollow particles D obtained in Production Example 4 or the hollow particles E obtained in Production Example 5 were used instead of the hollow particles A obtained in Production Example 1.

[Comparative Example 1]

The fluorine rubber composition and crosslinked molded body of Comparative Example 1 were obtained in the same manner as Example 1, except that the solid particles A obtained in Comparative Production Example 1 were used instead of the hollow particles A obtained in Production Example 1, and the amount of the added solid particles A was as shown in Table 2.

[Comparative Example 2]

The fluorine rubber composition and crosslinked molded body of Comparative Example 2 were obtained in the same manner as Example 1, except for the following: VITON (registered trademark) A-200 (manufactured by The Chemours Company, specific gravity: 1.82) was used as the fluorine rubber instead of VITON (registered trademark) GBL-200S; VC No. 30 (manufactured by The Chemours Company, compound name: bisphenol AF) was used as the crosslinking agent instead of PERHEXA (registered trademark) 25B-40; and TAIC as the crosslinking co-agent was not used.

[Comparative Example 3]

The fluorine rubber composition and crosslinked molded body of Comparative Example 3 were obtained in the same manner as Example 1, except for the following: VITON (registered trademark) B-202 (manufactured by The Chemours Company, specific gravity: 1.84) was used as the fluorine rubber instead of VITON (registered trademark) GBL-200S; DIAK NO. 1 (manufactured by DuPont, compound name: hexamethylenediamine carbamate) was used as the crosslinking agent instead of PERHEXA (registered trademark) 25B-40; and TAIC as the crosslinking co-agent was not used.

[Reference Example 1]

The fluorine rubber composition and crosslinked molded body of Reference Example 1 were obtained in the same manner as Example 1, except that the hollow particles A obtained in Production Example 1 were not added.

[Examples 8 and 9]

The fluorine rubber composition and crosslinked molded body of Examples 8 and 9 were obtained in the same manner as Example 1, except that the amount of the added hollow particles A was changed according to Table 3, and when adding the hollow particles A, MT carbon (nitrogen adsorption specific surface area: 7 $m^2$/g) was added as the reinforcing agent in an amount shown in Table 3, in combination with the hollow particles A.

[Example 10]

The fluorine rubber composition and crosslinked molded body of Example 10 were obtained in the same manner as Example 1, except that instead of the hollow particles A obtained in Production Example 1, the hollow particles B obtained in Production Example 2 were added in an amount shown in Table 3, and when adding the hollow particles B, MT carbon was added as the reinforcing agent in an amount shown in Table 3, in combination with the hollow particles B.

[Examples 11 and 12]

The fluorine rubber composition and crosslinked molded body of Examples 11 and 12 were obtained in the same manner as Example 1, except for the following: VITON (registered trademark) GBL-600S (VdF-HFP-TFE ternary copolymer-based, manufactured by The Chemours Company, fluorine content: 67% by mass, Mooney viscosity at 121°C (ML(1+10)): 65, specific gravity: 1.84) was used as the fluorine rubber instead of VITON (registered trademark) GBL-200S; the amount of the added hollow particles A was changed according to Table 3; and when adding the hollow particles A, MT carbon was added as the reinforcing agent in an amount shown in Table 3, in combination with the hollow particles A.

[Examples 13 and 14]

The fluorine rubber composition and crosslinked molded body of Examples 13 and 14 were obtained in the same manner as Example 1, except for the following: VITON (registered trademark) GF-200S (VdF-HFP-TFE ternary copolymer-based, manufactured by The Chemours Company, fluorine content: 70% by mass, Mooney viscosity at 121°C (ML(1+10)): 25, specific gravity: 1.90) was used as the fluorine rubber instead of VITON (registered trademark) GBL-200S; the amount of the added hollow particles A was changed according to Table 3; and when adding the hollow particles A, MT carbon was added as the reinforcing agent in an amount shown in Table 3, in combination with the hollow particles A.

[Example 15]

The fluorine rubber composition and crosslinked molded body of Example 15 were obtained in the same manner as Example 1, except that the amount of the added hollow particles A was changed according to Table 3, and when adding the hollow particles A, a coupling agent-treated silica was added as the reinforcing agent in an amount shown in Table 3, in combination with the hollow particles A. As the coupling agent-treated silica, a silica surface-treated with a silane coupling agent (vinyltrimethoxysilane, product name: KBM-1003, manufactured by: Shin-Etsu Chemical Co., Ltd.) was used.

[Evaluation of physical properties of crosslinked molded body]

1. Weight reduction rate

The crosslinked molded body was cut into a 1 cm square piece (thickness 2 mm). Using the piece as a sample, the specific gravity of the crosslinked molded body was measured by the underwater replacement method in accordance with JIS K 7112:1999.

From the thus-measured specific gravity of the crosslinked molded body and the specific gravity of the fluorine rubber used in the crosslinked molded body, the weight reduction rate (%) was calculated by the following formula (1).

Weight reduction rate (%) = {(Specific gravity of fluorine rubber - Specific gravity of crosslinked molded body) / Specific gravity of fluorine rubber} × 100          Formula (I)

2. Compression set

The compression set (%) of the crosslinked molded body was measured by the room temperature test in accordance with JIS K 6262:2013, using the columnar crosslinked molded body having a diameter of 29 mm ± 0.5 mm and a height of 12.5 mm ± 0.5 mm as the test piece, in the following conditions.

Standard temperature: 23°C ± 2°C
Testing temperature: 30°C
Testing time: 168 hours
Test piece compression rate: 25%

The measurement result was evaluated based on the following evaluation criteria.

(Compression set evaluation criteria)

S: The compression set was less than 25%.
A: The compression set was 25% or more and less than 40%.
B: The compression set was 40% or more and less than 60%.
C: The compression set was 60% or more.

More specifically, the compression set was measured by the following steps. First, at the standard temperature, the thickness of the center of the test piece was measured. The test piece was placed between compression plates (flat stainless-steel plates). A spacer (thickness 9.3 mm) was placed outside the test piece. They were compressed until the compression plates were firmly attached to the spacer. The apparatus compressing the test piece was kept in a constant temperature bath at the test temperature for the testing time mentioned above. After the lapse of the testing time, the apparatus was removed from the constant temperature bath. The test piece was immediately removed from the compression state, and it was left to stand for 30 minutes at the standard temperature. Then, the thickness of the center of the test piece was measured. From the thickness of the test piece before and after the compression and the thickness of the spacer, the compression set (%) was calculated by the formula (2).
[Math. 1]

$$CS = \frac{t_0 - t_2}{t_0 - t_1} \times 100$$

Formula (2):

CS: Compression set (%)
$t_0$: Original thickness (mm) of the test piece
$t_1$: Thickness (mm) of the spacer
$t_2$: Thickness (mm) of the test piece 30 minutes after being removed from the compression apparatus

3. 100% Tensile stress

In accordance with JIS K 6251:2017, using each dumbbell-shaped crosslinked molded body as a test piece, the 100% tensile stress was obtained at a test temperature of 25°C with a fully-automated rubber tensile testing machine (product name: No. 211 STROGRAPH AE ELASTOMER, manufactured by: Toyo Seiki Seisaku-sho, Ltd.) The obtained 100% tensile stress was evaluated based on the following evaluation criteria. The 100% tensile stress was the average of values obtained by use of three test pieces obtained from each dumbbell-shaped crosslinked molded body.

(Tensile stress evaluation criteria)

S: The 100% tensile stress was 6 MPa or more.
A: The 100% tensile stress was 4 MPa or more and less than 6 MPa.
B: The 100% tensile stress was 2 MPa or more and less than 4 MPa.
C: The 100% tensile stress was less than 2 MPa.

[Table 2]

Table 2

| | | | Example 1 | Example 2 | Example 3 | Example 4 | Example 5 | Example 6 | Example 7 |
|---|---|---|---|---|---|---|---|---|---|
| Fluorine rubber composition | Fluorine rubber | GBL-200S (parts) | 100 | 100 | 100 | 100 | 100 | 100 | 100 |
| | | A-200 (parts) | | | | | | | |
| | | B-202 (parts) | | | | | | | |
| | Crosslinking agent | Type | Peroxide | Peroxide | Peroxide | Peroxide | Peroxide | Peroxide | Peroxide |
| | | Amount (parts) | 2 | 2 | 2 | 2 | 2 | 2 | 2 |
| | Crosslinking co-agent | Type | TAIC | TAIC | TAIC | TAIC | TAIC | TAIC | TAIC |
| | | Amount (parts) | 4 | 4 | 4 | 4 | 4 | 4 | 4 |
| | Particles | Hollow particles A (parts) | 17.5 (50 vol. %) | 11.5 (40 vol. %) | 4.5 (20 vol. %) | | | | |
| | | Hollow particles B (parts) | | | | 17.5 (50 vol. %) | | | |
| | | Hollow particles C (parts) | | | | | 17.5 (50 vol. %) | | |
| | | Hollow particles D (parts) | | | | | | 17.5 (50 vol. %) | |
| | | Hollow particles E (parts) | | | | | | | 17.5 (50 vol. %) |
| | | Solid particles A (parts) | | | | | | | |
| Crosslinked molded body | | Specific gravity | 1.10 | 1.26 | 1.58 | 1.10 | 1.15 | 1.10 | 1.10 |
| | | Weight reduction rate (%) | 42 | 34 | 17 | 42 | 39 | 42 | 42 |
| | | Compression set | A | A | B | B | B | B | B |
| | | 100% Tensile stress | A | A | B | B | B | B | B |

EP 4 722 290 A1

35

Table 2-continued

| | | | Comparative Example 1 | Comparative Example 2 | Comparative Example 3 | Reference Example 1 |
|---|---|---|---|---|---|---|
| Fluorine rubber composition | Fluorine rubber | GBL-200S (parts) | 100 | | | 100 |
| | | A-200 (parts) | | 100 | | |
| | | B-202 (parts) | | | 100 | |
| | Crosslinking agent | Type | Peroxide | Bisphenol | Diamine | Peroxide |
| | | Amount (parts) | 2 | 2 | 2 | 2 |
| | Crosslinking co-agent | Type | TAIC | | | TAIC |
| | | Amount (parts) | 4 | | | 4 |
| | Particles | Hollow particles A (parts) | | 17.5 (50 vol. %) | 17.5 (50 vol. %) | |
| | | Hollow particles B (parts) | | | | |
| | | Hollow particles C (parts) | | | | |
| | | Hollow particles D (parts) | | | | |
| | | Hollow particles E (parts) | | | | |
| | | Solid particles A (parts) | 11.5 (20 vol. %) | | | |
| Crosslinked molded body | | Specific gravity | 1.70 | 1.05 | 1.10 | 1.84 |
| | | Weight reduction rate (%) | 11 | 42 | 42 | 0 |
| | | Compression set | B | C | C | C |
| | | 100% Tensile stress | B | C | C | C |

[Table 3]

Table 3

| | | | Example 8 | Example 9 | Example 10 | Example 11 | Example 12 | Example 13 | Example 14 | Example 15 |
|---|---|---|---|---|---|---|---|---|---|---|
| Fluorine rubber composition | Fluorine rubber | GBL-200S (parts) | 100 (50 vol. %) | 100 (57 vol. %) | 100 (50 vol. %) | | | | | 100 (57 vol. %) |
| | | GBL-600S (parts) | | | | 100 (50 vol. %) | 100 (57 vol. %) | | | |
| | | GF-200S (parts) | | | | | | 100 (50 vol. %) | 100 (57 vol. %) | |
| | Crosslinking agent | Type | Peroxide | Peroxide | Peroxide | Peroxide | Peroxide | Peroxide | Peroxide | Peroxide |
| | | Amount (parts) | 2 | 2 | 2 | 2 | 2 | 2 | 2 | 2 |
| | Crosslinking co-agent | Type | TAIC | TAIC | TAIC | TAIC | TAIC | TAIC | TAIC | TAIC |
| | | Amount (parts) | 4 | 4 | 4 | 4 | 4 | 4 | 4 | 4 |
| | Reinforcing agent | MT carbon (parts) | 5 (2 vol. %) | 10 (6 vol. %) | 5 (2 vol. %) | 5 (2 vol. %) | 10 (6 vol. %) | 5 (2 vol. %) | 10 (6 vol. %) | |
| | | Coupling agent-treated silica (parts) | | | | | | | | 10 (6 vol. %) |
| | Hollow particles | Hollow particles A (parts) | 15 (48 vol. %) | 10 (37 vol. %) | | 15 (48 vol. %) | 10 (37 vol. %) | 15 (48 vol. %) | 10 (37 vol. %) | 10 (37 vol. %) |
| | | Hollow particles B (parts) | | | 15 (48 vol. %) | | | | | |
| Crosslinked molded body | | Specific gravity | 1.13 | 1.31 | 1.13 | 1.13 | 1.31 | 1.13 | 1.31 | 1.34 |
| | | Weight reduction rate (%) | 40 | 31 | 40 | 40 | 31 | 40 | 31 | 29 |
| | | Compression set | S | S | S | S | S | S | S | A |
| | | 100% Tensile stress | S | S | S | S | S | S | S | S |

EP 4 722 290 A1

37

[Consideration]

The crosslinked molded bodies obtained in Examples 1 to 7 were obtained by crosslinking molding the fluorine rubber composition with the organic peroxide, the composition containing the hollow particles that had an iodine value of 10 g/100 g or more and 100 g/100 g or less and the fluorine rubber that was crosslinkable by a peroxide. Compared to the crosslinked molded body of Reference Example 1 which was the crosslinked molded body of the fluorine rubber that was free of hollow particles, the weights of the crosslinked molded bodies obtained in Examples 1 to 7 were reduced, and the compression sets thereof were small.

From a comparison between Examples 1 to 3, it was found that as the amount of the hollow particles contained in the crosslinked molded body increased, the weight reduction rate tended to increase, and the compression set tended to decrease.

The reason why the compression set of Example 1 was small compared to Example 4 is estimated as follows: since the iodine value of the hollow particles was moderately small in Example 1, the aggregation of the hollow particles was suppressed, and the hollow particles were uniformly dispersed; moreover, since the residual volatile component content of the hollow particles was small in Example 1, good reactivity between the hollow particles and the fluorine rubber was obtained and, as a result, the hollow particles uniformly suppressed the plastic deformation of the crosslinked molded body.

The reason why the compression set of Example 1 was small compared to Example 5 is estimated as follows: since the particle diameter of the hollow particles was moderately small in Example 1, the interface between the hollow particles and the fluorine rubber increased, and much more crosslinks were formed between the hollow particles and the fluorine rubber.

The reason why the compression set of Example 1 was smaller than Example 6 is estimated as follows: since the iodine value of the hollow particles was higher in Example 1, much more crosslinks were formed between the hollow particles and the fluorine rubber.

The reason why the compression set of Example 1 was small compared to Example 7 is estimated as follows: since the iodine value of the hollow particles was moderately small in Example 1, the aggregation of the hollow particles was suppressed; the hollow particles were uniformly dispersed; and, as a result, the hollow particles uniformly suppressed the plastic deformation of the crosslinked molded body.

The crosslinked molded body obtained in Comparative Example 1 contained the solid particles instead of hollow particles. The specific gravity of the solid particles A used in Comparative Example 1 was smaller than the fluorine rubber. Accordingly, the weight of the crosslinked molded body obtained in Comparative Example 1 was reduced compared to the crosslinked molded body of Reference Example 1. However, compared to the crosslinked molded body of Example 2 which contained the hollow particles A having the same mass as Comparative Example 1 and the crosslinked molded body of Example 3 which contained the hollow particles A having the same volume as Comparative Example 1, the weight reduction rate of the crosslinked molded body obtained in Comparative Example 1 was low, and the weight reduction effect thereof was poor. The reason for the reduced compression set of the crosslinked molded body obtained in Comparative Example 1 is estimated as follows: since the iodine value of the solid particles A was within a range of 10 g/100 g or more and 100 g/100 g or less, crosslinks were formed between the solid particles and the fluorine rubber.

The crosslinked molded bodies obtained in Comparative Examples 2 and 3 were obtained by crosslinking molding the composition with the polyol- or polyamine-based crosslinking agent instead of the organic peroxide. Since the crosslinked molded bodies obtained in Comparative Examples 2 and 3 contained the hollow particles, their weights were reduced compared to the crosslinked molded body of Reference Example 1; however, their compression sets were not reduced. This is estimated to be because no crosslinks were formed between the hollow particles and the fluorine rubber in the crosslinked molded bodies obtained in Comparative Examples 2 and 3.

The crosslinked molded bodies obtained in Examples 8 to 15 were obtained by crosslinking molding the fluorine rubber composition with the organic peroxide, the composition containing the hollow particles that had an iodine value of 10 g/100 g or more and 100 g/100 g or less and the fluorine rubber that was crosslinkable by a peroxide and the composition further containing the reinforcing agent. Compared to the crosslinked molded body of Reference Example 1 which was the crosslinked molded body of the fluorine rubber that was free of hollow particles, the weights of the crosslinked molded bodies obtained in Examples 8 to 15 were reduced, and the compression sets thereof were small. In addition, the 100% tensile stresses of the crosslinked molded bodies obtained in Examples 8 to 15, each of which contained the reinforcing agent, were improved compared to the crosslinked molded bodies obtained in Examples 1 to 7, each of which contained no reinforcing agent. As for the crosslinked molded bodies of Examples 8 to 14, each of which used the carbon black as the reinforcing agent, the compression set reduction effect improved compared to the crosslinked molded bodies obtained in Examples 1 to 7, each of which contained no reinforcing agent.

Reference Signs List

1. Aqueous medium
2. Low polarity material
4a. Hydrophobic solvent
4b. Material not containing hydrophobic solvent
6. Shell
7. Hollow portion
8. Droplet
9. Precursor particle
10. Hollow particle in which the hollow portion is filled with gas

## Claims

1. A fluorine rubber composition comprising hollow particles and a fluorine rubber,

   wherein the hollow particles comprise a shell, which contains a resin, and a hollow portion surrounded by the shell, and the hollow particles have an iodine value of 10 g/100 g or more and 100 g/100 g or less, which is measured in accordance with JIS K 0070, and
   wherein the fluorine rubber is a fluorine rubber that is crosslinkable by a peroxide.

2. The fluorine rubber composition according to Claim 1, wherein a content of the hollow particles is 1 part by mass or more and 50 parts by mass or less with respect to 100 parts by mass of the fluorine rubber.

3. The fluorine rubber composition according to Claim 1 or 2, wherein the fluorine rubber is a fluorine rubber containing at least one kind of halogen atom selected from the group consisting of iodine and bromine in a molecular chain thereof.

4. The fluorine rubber composition according to Claim 1 or 2, wherein a percentage of particles having a circularity of 0.85 or less is less than 15% by mass in the hollow particles.

5. The fluorine rubber composition according to Claim 1 or 2, wherein the hollow particles have a residual volatile component content of less than 100 ppm.

6. The fluorine rubber composition according to Claim 1 or 2, wherein the hollow particles contain, as the resin, a polymer containing a crosslinkable monomer unit of 50% by mass or more.

7. The fluorine rubber composition according to Claim 1 or 2, wherein the hollow particles have a volume average particle diameter of 0.1 $\mu$m or more and 100 $\mu$m or less.

8. The fluorine rubber composition according to Claim 1 or 2,

   wherein the fluorine rubber composition further comprises a reinforcing agent;
   wherein the reinforcing agent is at least one selected from the group consisting of carbon black and silica; and
   wherein a content of the reinforcing agent is 1 part by mass or more and 15 parts by mass or less with respect to 100 parts by mass of the fluorine rubber.

9. The fluorine rubber composition according to Claim 8, wherein the carbon black has a nitrogen adsorption specific surface area of 5 $m^2$/g or more and 150 $m^2$/g or less.

10. The fluorine rubber composition according to Claim 8, wherein the reinforcing agent is a coupling agent-treated silica.

11. A crosslinked molded body obtained by crosslinking molding the fluorine rubber composition defined by Claim 1 or 2 with an organic peroxide.

FIG. 1

## INTERNATIONAL SEARCH REPORT

| International application No. |
|---|
| **PCT/JP2024/018101** |

**A. CLASSIFICATION OF SUBJECT MATTER**

***C08L 27/12***(2006.01)i; ***C08F 2/18***(2006.01)i; ***C08K 5/14***(2006.01)i; ***C08K 7/22***(2006.01)i
FI: C08L27/12; C08K7/22; C08K5/14; C08F2/18

According to International Patent Classification (IPC) or to both national classification and IPC

**B. FIELDS SEARCHED**

Minimum documentation searched (classification system followed by classification symbols)

C08K3/00-13/08; C08L1/00-101/14; C08F2/00-2/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-183490 A (TIGERS POLYMER CORP.) 12 November 2020 (2020-11-12) claims 1-4, examples | 1-11 |
| A | CN 109721898 A (CHINA PETROLEUM & CHEMICAL CORPORATION) 07 May 2019 (2019-05-07) claims 1-10, examples | 1-11 |
| A | US 2007/0135577 A1 (SHEFELBINEM, Terri A. et al.) 14 June 2007 (2007-06-14) claims 1-22, examples | 1-11 |
| A | WO 2017/014064 A1 (MATSUMOTO YUSHI-SEIYAKU CO., LTD.) 26 January 2017 (2017-01-26) claims 1-13, examples | 1-11 |
| A | JP 2012-126809 A (MITSUBISHI CABLE IND LTD.) 05 July 2012 (2012-07-05) claims 1-6, examples | 1-11 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 July 2024** | **16 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/018101**

C.    DOCUMENTS CONSIDERED TO BE RELEVANT

| Category* | Citation of document, with indication, where appropriate, of the relevant passages | Relevant to claim No. |
|---|---|---|
| P, A | WO 2023/234162 A1 (ZEON CORPORATION) 07 December 2023 (2023-12-07) claims 1-31, examples | 1-11 |

Form PCT/ISA/210 (second sheet) (July 2022)

## INTERNATIONAL SEARCH REPORT
### Information on patent family members

International application No.

**PCT/JP2024/018101**

| Patent document cited in search report | | | Publication date (day/month/year) | Patent family member(s) | | | Publication date (day/month/year) |
|---|---|---|---|---|---|---|---|
| JP | 2020-183490 | A | 12 November 2020 | (Family: none) | | | |
| CN | 109721898 | A | 07 May 2019 | (Family: none) | | | |
| US | 2007/0135577 | A1 | 14 June 2007 | WO | 2007/111730 | A2 | |
| WO | 2017/014064 | A1 | 26 January 2017 | US claims 1-13, examples CN KR | 2018/0208733 107849286 10-2018-0034504 | A1 A A | |
| JP | 2012-126809 | A | 05 July 2012 | (Family: none) | | | |
| WO | 2023/234162 | A1 | 07 December 2023 | TW claims 1-31, examples | 202402924 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6116787 B
- WO 2020261926 A
- WO 2021112110 A
- WO 2019230830 A

**Non-patent literature cited in the description**

- Kagaku Binran, Kiso Hen, Kaitei 4 Ban. Maruzen Publishing Co., Ltd., 30 September 1993, 498-503